# EUROPEAN PATENT APPLICATION

(11) **EP 4 697 157 A1**
(43) Date of publication of application: **18.02.2026**
(21) Application number: 24864572.3
(22) Date of filing: 09.09.2024
(51) Int. Cl.: G06F 3/14

(54) **DISPLAY METHOD AND RELATED APPARATUS**

(30) Priority: 11.09.2023 CN 202311175841
(71) Applicant: Huawei Technologies Co., Ltd., Shenzhen, Guangdong 518129 (CN)
(72) Inventor: CHEN, Zhan, Shenzhen, Guangdong 518129 (CN); WEI, Peng, Shenzhen, Guangdong 518129 (CN); HUANG, Lei, Shenzhen, Guangdong 518129 (CN); MA, Chunhui, Shenzhen, Guangdong 518129 (CN); ZHAO, Jie, Shenzhen, Guangdong 518129 (CN); CHEN, Xiaohan, Shenzhen, Guangdong 518129 (CN); LIU, Hang, Shenzhen, Guangdong 518129 (CN)
(74) Representative: Grünecker Patent- und Rechtsanwälte PartG mbB
(86) International application number: PCT/CN2024/117716
(87) International publication number: WO 2025/055852

(57) **Abstract**

This application discloses a display method and a related apparatus. A display of an electronic device is off. When the display remains off, it is detected that a user enters a first region. If it is detected that the user stays in the first region for first duration and stays in a second region for the first duration, the display is switched from being off to being on, and a first interface is displayed on the display. The first region includes the second region. After the first interface is displayed on the display, if it is detected that duration for which the user leaves the first region reaches second duration, the display is switched from displaying the first interface to being off. If it is detected that the user stays in the first region for the first duration but does not stay in the second region for the first duration, the display is kept off. In this way, after detecting that the user enters the first region, the electronic device still keeps the display off, and displays a mural interface only after determining that the user stays in the second region for the first duration. This avoids a case that a user action is interfered with because the electronic device frequently turns on a screen when the user passes by, to reduce power consumption.

## Description

This application claims priority to Chinese Patent Application No. 202311175841.1, filed with the China National Intellectual Property Administration on September 11, 2023 and entitled "DISPLAY METHOD AND RELATED APPARATUS", which is incorporated herein by reference in its entirety.

### TECHNICAL FIELD

This application relates to the field of terminals, and in particular, to a display method and a related apparatus.

### BACKGROUND

Currently, an electronic device like a television may provide a movie watching function for a user, and the user may enjoy better movie watching experience through a large-sized screen of the electronic device like the television. When the user does not watch a movie, the electronic device may also display some paintings, photos, and the like. The electronic device may serve as a decoration, to make an ambient environment more beautiful.

However, to display works such as the paintings and the photos, the electronic device is in a screen-on state for a long time. This results in high device power consumption.

### SUMMARY

This application provides a display method and a related apparatus, to display a mural interface in a timely manner based on a displayed interface and a status of a specified region after switching. The mural interface may be used to decorate a room, so that an entire space is more beautiful and coordinated. An electronic device may also turn off a screen in a timely manner based on a status change of the specified region, to reduce power consumption of the electronic device.

According to a first aspect, this application provides a display method, applied to an electronic device. The electronic device includes a display, and the method includes:
turning off the display; when the display remains off, detecting that a user enters a first region; if it is detected that the user stays in the first region for first duration and stays in a second region for the first duration, switching the display from being off to being on, and displaying a first interface on the display, where the first region includes the second region; after displaying the first interface on the display, if it is detected that duration for which the user leaves the first region reaches second duration, switching the display from displaying the first interface to being off; and if it is detected that the user stays in the first region for the first duration but does not stay in the second region for the first duration, keeping the display off. In this way, after detecting that the user appears in a specified region, the electronic device still keeps the display off, and displays the first interface only after the electronic device determines that the user stays in a specified sub-region for the first duration. This avoids a case that a user action is interfered with because the electronic device frequently turns on a screen when the user passes by, to reduce power consumption of the electronic device.

In some examples, reaching is greater than or equal to. Detecting that the duration for which the user leaves the first region reaches the second duration is detecting that the duration for which the user leaves the first region is greater than or equal to the second duration.

In a possible implementation, the method further includes: in response to a received first input, switching the display from being on to being off; when the display is off, detecting whether the user leaves the first region; and if it is detected that the duration for which the user leaves the first region reaches third duration, detecting whether the user enters the first region, where the third duration is less than the second duration. In this way, when the electronic device receives the first input in a screen-on state, it may be considered that the user wants to turn off the screen and does not intend to enable the electronic device to turn on the screen and display the first interface. In other words, although the user is located in the specified region, the electronic device 100 does not turn on the screen and display the first interface.

In a possible implementation, the method further includes: displaying a second interface on the display, where the second interface is different from the first interface; detecting a user input when displaying the second interface on the display, and displaying the first interface on the display if it is detected that duration for which no user input is received reaches fourth duration; and when displaying the first interface on the display, detecting whether the user leaves the first region, and turning off the display if it is detected that the duration for which the user leaves the first region reaches fifth duration.

The second interface is a non-task interface, namely, an interface other than the first interface and a task interface. The second interface may include a home screen.

In this way, when the electronic device detects that the user does not operate the electronic device within the fourth duration, the electronic device displays the first interface to display a painting or a photo, to improve an aesthetic degree of a space in which the electronic device 100 is located.

In a possible implementation, after displaying the first interface on the display and before switching the display from displaying the first interface to being off, the method further includes: displaying a first countdown on the first interface when it is detected that the duration for which the user leaves the first region reaches the third duration, where duration of the first countdown is equal to sixth duration, and the sixth duration is a difference between the second duration and the third duration; or displaying a second countdown on the first interface when it is detected that the duration for which the user leaves the first region reaches seventh duration, where duration of the second countdown is equal to sixth duration, and the sixth duration is a difference between the fifth duration and the seventh duration. In this way, the electronic device displays the first countdown, to indicate a time point at which the electronic device turns off the screen.

In a possible implementation, after displaying the first countdown on the first interface, the method further includes: before it is detected that the duration for which the user leaves the first region reaches the second duration, if it is detected that the user enters the first region, canceling displaying the first countdown. In this way, before the first countdown ends, if the electronic device detects that a person enters the first region, the electronic device interrupts the first countdown and keeps displaying a mural interface.

In a possible implementation, after displaying the first countdown on the first interface, the method further includes: before it is detected that the duration for which the user leaves the first region reaches the fifth duration, if it is detected that the user enters the first region, canceling displaying the second countdown.

In some examples, the first countdown is the same as or different from the second countdown.

In a possible implementation, the electronic device further includes a camera, and the first region is within a field of view FOV range of the camera. In this way, the electronic device determines, through the camera, whether the user stays in the specified sub-region.

In a possible implementation, the first interface is a wallpaper interface. In this way, the electronic device displays the mural interface in a timely manner based on a display status and a switching condition, so that a requirement of the user for viewing the mural interface is satisfied, and the screen is turned off when the user does not need to view the mural interface, to reduce power consumption of the electronic device.

In a possible implementation, the method further includes one or more of the following: switching an unoccupied state to an occupied and non-staying state in response to detecting that the user enters the first region; switching the occupied and non-staying state to an occupied and staying state in response to detecting that the user stays in the second region for the first duration; and switching the occupied and staying state to the unoccupied state in response to detecting that the duration for which the user leaves the first region reaches the third duration.

In some examples, in response to switching the occupied and non-staying state to the occupied and staying state, the display is turned on and the first interface is displayed.

In a possible implementation, after displaying the first interface on the display, if it is detected that the duration for which the user leaves the first region reaches the second duration, switching the display from displaying the first interface to being off specifically includes: turning off the display when it is detected that duration for which the occupied and staying state is switched to the unoccupied state reaches the sixth duration, where the sixth duration is the difference between the second duration and the third duration.

In some examples, the display is turned off in response to detecting that the duration for which the occupied and staying state is switched to the unoccupied state reaches the sixth duration.

In a possible implementation, the method further includes one or more of the following: setting to an occupied and staying state in response to the first input; and switching the occupied and staying state to an unoccupied state in response to detecting that the duration for which the user leaves the first region reaches the third duration.

In some examples, the display is turned off in response to that the occupied and staying state is set.

In a possible implementation, the method further includes one or more of the following: setting to an occupied and non-staying state in response to detecting that the duration for which no input is received reaches the fourth duration; and switching the occupied and non-staying state to an unoccupied state in response to detecting that the duration for which the user leaves the first region reaches seventh duration. The seventh duration is less than the fifth duration.

In some examples, the first interface is displayed in response to that the occupied and non-staying state is set.

In a possible implementation, turning off the display if it is detected that the duration for which the user leaves the first region reaches the fifth duration specifically includes: turning off the display when it is detected that duration for which the occupied and non-staying state is switched to the unoccupied state reaches sixth duration, where the sixth duration is a difference between the fifth duration and the seventh duration.

In a possible implementation, turning on the display and displaying the first interface on the display when it is detected that duration for which the user stays in the second region in the first region reaches the first duration specifically includes: capturing M frames of images through the camera within the first duration; and turning on the display and displaying the first interface on the display when it is detected that the user is in the second region in the M frames of images. In this way, the electronic device determines, based on the obtained image, whether the user is located in the first region.

In a possible implementation, turning off the display when it is detected that the duration for which the user leaves the first region reaches the second duration specifically includes: capturing N frames of images through the camera within the second duration; and turning off the display when it is detected that the N frames of images do not include the user. In this way, the electronic device determines, based on the obtained image, whether the user is located in the first region.

In a possible implementation, if a decoration style of a room in which the electronic device is located is a first decoration style and light of the room in which the electronic device is located is a first color temperature, the first interface includes first display content; if the decoration style of the room in which the electronic device is located is the first decoration style and the light of the room in which the electronic device is located is a second color temperature, the first interface includes second display content, where the first color temperature is different from the second color temperature, and a tone of the first display content is different from a tone of the second display content; and if the decoration style of the room in which the electronic device is located is a second decoration style and the light of the room in which the electronic device is located is the first color temperature, the first interface includes third display content, where the first decoration style is different from the second decoration style, and a type of the first display content is different from a type of the third display content. In this way, the electronic device displays, on the first interface, a work having a consistent style with an environment in which the electronic device is located, to enhance a sense of immersion and a sense of envelopment of the user, and improve user experience.

In a possible implementation, after displaying the first interface, the method further includes: receiving a second input for the first interface, and displaying a first animation effect on the first interface in response to the second input; and receiving a third input for the first interface, and displaying a second animation effect on the first interface in response to the third input, where the second input is different from the third input, and the first animation effect is different from the second animation effect. In this way, the first interface provides an interaction function for the user, and the electronic device senses an interaction behavior of the user and outputs a corresponding interaction result based on the interaction behavior of the user. This increases fun and interaction of the mural interface.

According to a second aspect, this application provides a display method, applied to an electronic device. The electronic device includes a display, and the method includes: turning off the display; when the display remains off, detecting that a user enters a first region; after detecting that the user enters the first region, if it is detected that duration for which the user gazes at the display reaches first duration, switching the display from being off to being on, and displaying a first interface on the display; after displaying the first interface on the display, if it is detected that duration for which the user leaves the first region reaches second duration, switching the display from displaying the first interface to being off; and after detecting that the user enters the first region, if it is detected that the duration for which the user gazes at the display does not reach the first duration, keeping the display off. In this way, after detecting that the user is located in a specified region, the electronic device detects whether the user gazes at the electronic device. This can reduce power consumption of determining a line-of-sight range of the user by the electronic device. In addition, the electronic device 100 may determine, after detecting that duration for which the user gazes at the electronic device reaches preset gaze duration, that the user wants to view a mural interface, and provide the mural interface for the user. The electronic device 100 may not need to determine, when the user is located in the specified region, whether the user gazes at the electronic device, to reduce power consumption of the electronic device.

In some examples, the gaze is that a line of sight of the user falls on the electronic device.

In a possible implementation, the method further includes: turning off the display in response to a received first input; when the display is off, detecting whether the user leaves the first region; and if it is detected that the duration for which the user leaves the first region reaches third duration, detecting whether the user enters the first region, where the third duration is less than the second duration.

In a possible implementation, the method further includes: displaying a second interface on the display, where the second interface is different from the first interface; detecting a user input when displaying the second interface on the display, and displaying the first interface on the display if it is detected that duration for which no user input is received reaches fourth duration; and when displaying the first interface on the display, detecting whether the user leaves the first region, and turning off the display if it is detected that the duration for which the user leaves the first region reaches fifth duration.

In a possible implementation, after displaying the first interface on the display and before switching the display from displaying the first interface to being off, the method further includes: displaying a first countdown on the first interface when it is detected that the duration for which the user leaves the first region reaches the third duration, where duration of the first countdown is equal to sixth duration, and the sixth duration is a difference between the second duration and the third duration; or displaying a second countdown on the first interface when it is detected that the duration for which the user leaves the first region reaches seventh duration, where duration of the second countdown is equal to sixth duration, and the sixth duration is a difference between the fifth duration and the seventh duration.

In a possible implementation, after displaying the first countdown on the first interface, the method further includes: before it is detected that the duration for which the user leaves the first region reaches the second duration, if it is detected that the user enters the first region, canceling displaying the first countdown.

In a possible implementation, after displaying the first countdown on the first interface, the method further includes: before it is detected that the duration for which the user leaves the first region reaches the fifth duration, if it is detected that the user enters the first region, canceling displaying the second countdown.

In some examples, the first countdown is the same as or different from the second countdown.

In a possible implementation, the electronic device further includes a camera, and the first region is within a field of view FOV range of the camera. In this way, the electronic device determines, through the camera, whether the user stays in a specified sub-region.

In a possible implementation, the first interface is a wallpaper interface. In this way, the electronic device displays the mural interface in a timely manner based on a display status and a switching condition, so that a requirement of the user for viewing the mural interface is satisfied, and the screen is turned off when the user does not need to view the mural interface, to reduce power consumption of the electronic device.

In a possible implementation, the method further includes one or more of the following: switching an unoccupied state to an occupied and non-staying state in response to detecting that the user enters the first region; switching the occupied and non-staying state to an occupied and staying state in response to detecting that the user gazes at the electronic device for the first duration; and switching the occupied and staying state to the unoccupied state in response to detecting that the duration for which the user leaves the first region reaches the third duration.

In some examples, in response to switching the occupied and non-staying state to the occupied and staying state, the display is turned on and the first interface is displayed.

In a possible implementation, after displaying the first interface on the display, if it is detected that the duration for which the user leaves the first region reaches the second duration, switching the display from displaying the first interface to being off specifically includes: turning off the display when it is detected that duration for which the occupied and staying state is switched to the unoccupied state reaches the sixth duration, where the sixth duration is the difference between the second duration and the third duration.

In some examples, the display is turned off in response to detecting that the duration for which the occupied and staying state is switched to the unoccupied state reaches the sixth duration.

In a possible implementation, the method further includes one or more of the following: setting to an occupied and staying state in response to the first input; and switching the occupied and staying state to an unoccupied state in response to detecting that the duration for which the user leaves the first region reaches the third duration.

In some examples, the display is turned off in response to that the occupied and staying state is set.

In a possible implementation, the method further includes one or more of the following: setting to an occupied and non-staying state in response to detecting that the duration for which no input is received reaches the fourth duration; and switching the occupied and non-staying state to an unoccupied state in response to detecting that the duration for which the user leaves the first region reaches seventh duration. The seventh duration is less than the fifth duration.

In some examples, the first interface is displayed in response to that the occupied and non-staying state is set.

In a possible implementation, turning off the display if it is detected that the duration for which the user leaves the first region reaches the fifth duration specifically includes: turning off the display when it is detected that duration for which the occupied and non-staying state is switched to the unoccupied state reaches sixth duration, where the sixth duration is a difference between the fifth duration and the seventh duration.

In a possible implementation, turning on the display and displaying the first interface on the display when it is detected that duration for which the user gazes at the electronic device reaches the first duration specifically includes: capturing M frames of images through the camera within the first duration; and turning on the display and displaying the first interface on the display when it is detected that the user gazes at the electronic device in the M frames of images. In this way, the electronic device determines, based on the obtained image, whether the user is located in the first region.

In a possible implementation, turning off the display when it is detected that the duration for which the user leaves the first region reaches the second duration specifically includes: capturing N frames of images through the camera within the second duration; and turning off the display when it is detected that the N frames of images do not include the user. In this way, the electronic device determines, based on the obtained image, whether the user is located in the first region.

According to a third aspect, this application provides an electronic device, including a display, one or more processors, and one or more memories. The one or more memories are coupled to the plurality of processors, the one or more memories are configured to store an executable program, and when the one or more processors execute the executable program, the electronic device is enabled to perform any possible implementation method in the first aspect or the second aspect.

According to a fourth aspect, this application provides a readable storage medium that stores a program. When the program is run on a processor of an electronic device, the electronic device is enabled to perform the method in the second aspect.

### BRIEF DESCRIPTION OF DRAWINGS

FIG. 1 is a diagram of a hardware structure of an electronic device 100 according to an embodiment of this application;
FIG. 2 is a diagram of a type of status switching according to an embodiment of this application;
FIG. 3A to FIG. 3D are a diagram of a group of specified regions according to an embodiment of this application;
FIG. 4 is a schematic flowchart of status switching according to an embodiment of this application;
FIG. 5A is a diagram of another type of status switching according to an embodiment of this application;
FIG. 5B is another schematic flowchart according to an embodiment of this application;
FIG. 6 is a diagram of a line-of-sight projection range according to an embodiment of this application;
FIG. 7 is a diagram of a coordinate system according to an embodiment of this application;
FIG. 8A to FIG. 8D are a diagram of a group of line-of-sight projection ranges according to an embodiment of this application;
FIG. 9 is another schematic flowchart according to an embodiment of this application;
FIG. 10A to FIG. 10C are a diagram of a group of scenarios according to an embodiment of this application;
FIG. 11 is another schematic flowchart according to an embodiment of this application;
FIG. 12A to FIG. 12C are a diagram of a group of scenarios according to an embodiment of this application;
FIG. 13A and FIG. 13B are a diagram of another group of scenarios according to an embodiment of this application;
FIG. 14A and FIG. 14B are a diagram of another group of scenarios according to an embodiment of this application; and
FIG. 15 is a diagram of another scenario according to an embodiment of this application.

### DESCRIPTION OF EMBODIMENTS

The technical solutions according to embodiments of this application are clearly and completely described in the following with reference to the accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

Terms "first" and "second" mentioned below are merely intended for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

First, an electronic device 100 provided in embodiments of this application is described.

The electronic device 100 may be an electronic device including a display. For example, the electronic device 100 may be a television, a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), an artificial intelligence (artificial intelligence, AI) device, a wearable device, a vehicle-mounted device, a smart home device, a smart city device, and/or the like. In some examples, the electronic device 100 may alternatively be a projection device. A specific type of the electronic device is not specifically limited in embodiments of this application.

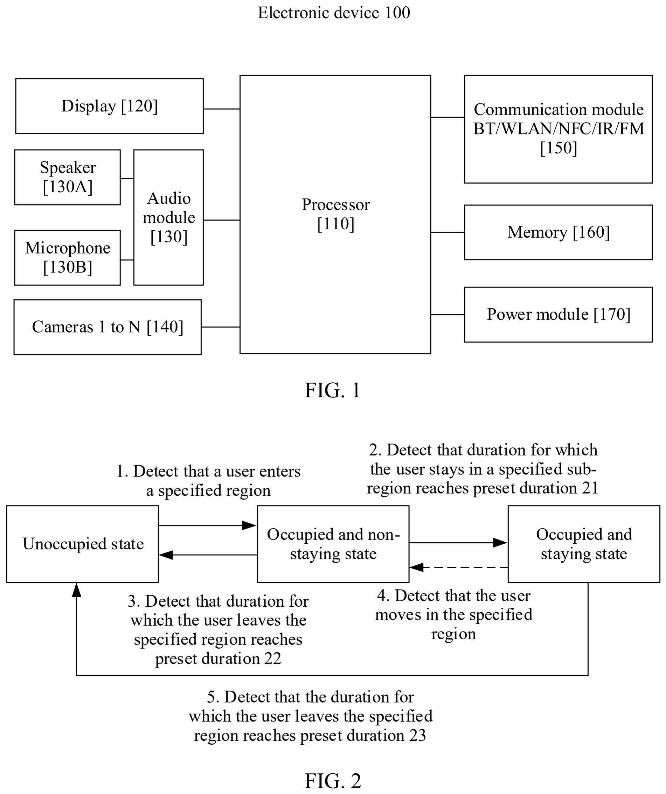

FIG. 1 is a diagram of a hardware structure of the electronic device 100.

The electronic device 100 may include but is not limited to a processor 110, a display 120, an audio module 130, a camera 140, a communication module 150, a memory 160, a power module 170, and the like.

It may be understood that the structure shown in embodiments of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a high definition multimedia interface (high definition multimedia interface, HDMI), a universal serial bus (universal serial bus, USB) interface, and the like. The HDMI interface is a full-digital video and sound sending interface, and may be configured to send uncompressed audio and video signals. In some embodiments, the electronic device 100 may establish a connection to a set-top box through the HDMI interface, and obtain video and audio signals through the set-top box. The USB interface is an interface that conforms to a USB standard specification, and may be specifically a mini USB interface, a micro USB interface, a USB Type-C interface, or the like. The USB interface may be configured to transmit data between the electronic device 100 and another electronic device.

It may be understood that an interface connection relationship between the modules shown in embodiments of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners. It may be understood that an interface connection relationship between the modules shown in embodiments of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The electronic device 100 implements a display function through the GPU, the display 120, the application processor, and the like. The GPU is a microprocessor for image processing, and is connected to the display 120 and the application processor. The GPU is configured to: perform mathematical and geometric computation, and render an image. The processor 110 may include one or more GPUs that execute program instructions to generate or change display information.

The display 120 is configured to display an image, a video, and the like. The display 120 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 120, where N is a positive integer greater than 1.

The electronic device 100 may further include a pressure sensor, a touch sensor, and the like. The pressure sensor may be configured to: sense a pressure signal, and convert the pressure signal into an electrical signal. In some examples, the pressure sensor may be disposed on the display 120, and is configured to detect a pressure signal of pressing the display 120 by a user. The touch sensor is also referred to as a "touch panel". The touch sensor may be disposed on the display 120, and the touch sensor and the display 120 form a touchscreen, which is also referred to as a "touch screen". The touch sensor is configured to detect a touch operation performed on or near the touch sensor. The touch sensor may transfer the detected touch operation to the application processor to determine a type of a touch event. The electronic device 100 may provide a visual output related to the touch operation through the display 120. In some other embodiments, the touch sensor may alternatively be disposed on a surface of the electronic device 100 at a position different from that of the display 120.

The audio module 130 may be configured to convert digital audio information into an analog audio signal for output, and is also configured to convert an analog audio input into a digital audio signal. The audio module 130 may be further configured to encode and decode an audio signal. In some embodiments, the audio module 130 may be disposed in the processor 110, or a part of function modules in the audio module 130 are disposed in the processor 110. The speaker 130A may be configured to convert an audio electrical signal into a sound signal. The electronic device 100 may be used to: listen to dubbing and music of a video or a game, answer a call, or the like over the speaker 130A. The microphone 130B may be configured to convert a sound signal into an electrical signal. The electronic device 100 may implement functions such as sound signal collection, noise reduction, sound source recognition, and recording through the microphone 130B.

The electronic device 100 may implement an image shooting function through the ISP, the camera 140, the video codec, the GPU, the display 120, the application processor, and the like. The ISP is configured to process data fed back by the camera 140. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 140.

The camera 140 is configured to capture a static image or a video. An optical image of an object is generated through the lens, and is projected onto the photosensitive element. The photosensitive element may be a charge coupled-device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 140, where N is a positive integer greater than 1.

In embodiments of this application, the electronic device 100 may capture, through the camera 140, an image obtained by the camera. The image obtained by the camera may be used by the electronic device 100 to determine whether the user is located in a specified region and whether a line-of-sight projection range of the user includes the electronic device 100. The image obtained by the camera may be further used by the electronic device 100 to search for and display a mural interface that matches a current scenario.

The communication module 150 may be used by the electronic device 100 to transmit data to another electronic device. The communication module 150 may provide a communication solution that is applied to the electronic device 100 and that includes a wireless local area network (wireless local area network, WLAN) (for example, a Wi-Fi network), an infrared (infrared, IR) technology, Bluetooth (Bluetooth, BT), frequency modulation (frequency modulation, FM), a near field communication (near field communication, NFC) technology, or the like. The Bluetooth communication solution may include one or more of classic Bluetooth (basic rate/enhanced data rate, BR/EDR) or Bluetooth low energy (Bluetooth low energy, BLE).

In embodiments of this application, the electronic device 100 may receive a control signal of a remote control device 200 through the communication module 150. The processor 110 may switch a channel, adjust volume, turn off a screen, turn on the screen, or the like based on the control signal. For example, the control signal sent by the remote control device 200 may be an infrared signal, a Bluetooth signal, or the like. For example, the remote control device 200 may include a power button, a back button, and the like. The power button may be used to trigger the remote control device 200 to indicate the electronic device 100 to turn off or turn on the screen. The remote control device 200 may be a remote control. In this way, the electronic device 100 can process the control signal sent by the remote control device 200, and feed back a processing result to the user through the display 120. The user may control, through the remote control device 200, content displayed by the electronic device 100.

In some examples, the electronic device 100 may display a cursor, and the cursor may be used to prompt the user that the remote control device 200 points to an icon displayed by the electronic device 100. The remote control device 200 may be configured to: receive an input of moving the remote control device 200 by the user, and send a control signal to the electronic device 100. The control signal may be used to control the cursor to move on the display of the electronic device 100. In this way, the user may move, by moving the remote control device 200, the cursor displayed by the electronic device 100, to select a corresponding icon.

Alternatively, the remote control device 200 may include a touchpad. The touchpad may be configured to: receive a touch input of the user, and generate a control signal based on a touch action of a finger of the user. The control signal may be used to control the cursor to move on the display of the electronic device 100. In this way, the cursor of the electronic device 100 may move with movement of the user on the touchpad of the remote control device 200. The user may control, through the remote control device 200, the cursor displayed by the electronic device 100.

It should be noted that, the remote control device 200 may be an electronic device like a mobile phone or a tablet computer, and is not limited to the remote control. A remote control application may be installed on the remote control device 200. The remote control application may display, on the touchscreen of the remote control device 200, a control corresponding to a function button of the remote control device 200. The user may implement, through a control provided by the remote control application, a function of controlling the electronic device 100.

The memory 160 may be configured to store various software programs and/or a plurality of groups of instructions. The processor 110 may implement an application function provided by the electronic device 100 by running the software programs and/or the plurality of groups of instructions stored in the memory 160. During specific implementation, the memory 160 may include a high-speed random access memory, and may also include a nonvolatile memory, for example, one or more disk storage devices, a flash device, or another nonvolatile solid-state storage device.

The power module 170 may be configured to: receive an input of a power supply, and supply power to each component of the electronic device 100.

In some examples, the electronic device may further include an ambient light sensor. The ambient light sensor may be configured to sense an ambient light intensity.

In some examples, the electronic device 100 may further include one or more buttons. The one or more buttons may include but are not limited to a power button, a volume button, and the like.

In some examples, the electronic device 100 may further include one or more ambient lights. The electronic device 100 may light up the one or more ambient lights when displaying the mural interface, and control brightness, a color temperature, and the like of the one or more ambient lights. In this way, the electronic device 100 can provide a better effect of viewing the mural interface for the user.

In a possible implementation, the electronic device 100 turns off the screen. If the electronic device 100 detects that the user enters the specified region, the electronic device 100 turns on the screen and displays the mural interface. If the electronic device 100 detects that the user leaves the specified region and duration for which the user leaves the specified region reaches preset leave duration, the electronic device 100 turns off the screen. In this way, the electronic device 100 can display the mural interface when detecting that the user stays in front of the electronic device 100. The electronic device 100 may further turn off the screen after detecting that the user leaves, to implement an effect of turning on the screen when the user stays and turning off the screen when the user leaves.

For better descriptions of a display method provided in embodiments of this application, a type of a user interface displayed by the electronic device 100 in embodiments of this application is first described. After the electronic device 100 turns off the screen, the display of the electronic device 100 is in an off state, and does not display any interface. After the electronic device 100 turns on the screen, the electronic device 100 may display the user interface through the display. The user interface may include but is not limited to a non-task interface, a task interface, and the mural interface.

The task interface may be used to play a multimedia file (for example, a video or an audio). For example, the task interface may include but is not limited to a video playing interface, a music playing interface, a game interface, and the like. The user may watch a video, listen to an audio, and participate in a game through the task interface.

The mural interface may be used to display an image work like a painting or a photo. When the electronic device 100 displays the mural interface, the electronic device 100 may be in a standby state. The mural interface may also be referred to as a wallpaper, a screen saver, or the like.

For ease of description, an interface other than the task interface and the mural interface may be referred to as the "non-task interface". For example, the non-task interface may include but is not limited to a home page (also referred to as a home screen), a settings interface, a channel selection interface, and the like. For example, the non-task interface may include one or more function controls. The one or more function controls may include but are not limited to a settings control, an application control, a video preview control, and/or the like. For example, the settings control may be used to: adjust a signal source of the electronic device 100, adjust screen brightness of the electronic device 100, pause a video, adjust a playing progress of the video, adjust a playing speed of the video, and the like. The application control may be used to trigger the electronic device 100 to display an application interface. For example, the application control may include a video application control, a music application control, a game application control, and the like. The video application control may be used to trigger the electronic device 100 to display a main interface of a video application. The video preview control may be used to trigger the electronic device 100 to play a video corresponding to the video preview control.

It should be noted that, when the electronic device 100 displays the mural interface, after receiving a control signal that is sent by the remote control device 200 and that is used to display the home screen, the electronic device 100 may display the home screen in response to the control signal. For example, the remote control device 200 may send the control signal to the electronic device 100 after receiving an input (for example, a pressing input) of the user for the power button. Similarly, when the electronic device 100 displays the task interface, after receiving a control signal that is sent by the remote control device 200 and that is used to exit the task interface, the electronic device 100 may display the non-task interface in response to the control information. For example, the remote control device 200 may send the control signal to the electronic device 100 after receiving an input (for example, a pressing input) of the user for the back button.

In some examples, the electronic device 100 may set two states for the specified region. The two states include an unoccupied state and an occupied state. When the electronic device 100 sets the specified region to be in the unoccupied state and the electronic device 100 turns off the screen, when detecting that the user enters the specified region, the electronic device 100 may switch a status of the specified region from the unoccupied state to the occupied state, turn on the screen of the electronic device 100, and display the mural interface. When the electronic device 100 sets the specified region to be in the occupied state and the electronic device 100 displays the mural interface, when the electronic device 100 detects that the user leaves the specified region and the duration for which the user leaves the specified region reaches the preset leave duration, the electronic device 100 may switch the status of the specified region from the occupied state to the unoccupied state, and turn off the screen. The specified region may be any region that can be detected by the electronic device 100. For example, the specified region may be located in front of the display of the electronic device 100, for example, directly in front of the display of the electronic device 100 or obliquely in front of the display of the electronic device 100. In this way, the electronic device 100 can not only display the mural interface when detecting that the user is located in the specified region, to improve scenario aesthetics, but also turn off the screen after detecting that the user leaves the specified region, to reduce power consumption of the electronic device 100.

It should be noted that, the description of setting the status of the specified region in embodiments of this application is merely an example. The electronic device 100 may not need to set the status of the specified region, but only needs to detect whether the duration for which the user leaves the specified region reaches the preset leave duration after detecting that the user enters the specified region, to perform, based on a detection result, an operation of turning off the screen or displaying the mural interface. This is not limited in embodiments of this application.

Embodiments of this application provide a display method. The electronic device 100 turns off the screen. After detecting that the user enters the specified region, the electronic device 100 detects that the user enters the specified region and duration for which the user stays in a specified sub-region in the specified region reaches preset stay duration (for example, 5 seconds). In this case, the electronic device 100 turns on the screen and displays the mural interface. The electronic device 100 displays a wallpaper interface, and after the electronic device 100 detects that the user leaves the specified region and the duration for which the user leaves the specified region reaches the preset leave duration, the electronic device 100 turns off the screen. The specified region may be located in front of the display of the electronic device 100. In this way, the user may pass by the electronic device 100 in a process of going to a destination, and the user tends to hurry to the destination and does not pay attention to whether the electronic device 100 displays the mural interface. Therefore, after the electronic device 100 detects that the user appears in the specified region, because duration for which the user stays in the specified sub-region does not reach the preset stay duration, the electronic device 100 still remains a screen-off state, and does not display the mural interface until the electronic device 100 determines that the user stays in the specified sub-region for a period of time. This avoids a case that a user action is interfered with because the electronic device 100 frequently turns on a screen when the user passes by, to reduce power consumption of the electronic device 100.

It should be noted that, when keeping the screen off, the electronic device 100 detects that the user enters the specified region. If the electronic device 100 detects that the user stays in the specified region for the preset stay duration and stays in the specified sub-region for the preset stay duration, the electronic device 100 switches the display from being off to being on, and displays the mural interface on the display. If the electronic device 100 detects that the user stays in the specified region for the preset stay duration but does not stay in the specified sub-region for the preset stay duration, the electronic device 100 keeps the screen off.

For example, the electronic device 100 may set three states for the specified region. The three states include the unoccupied state, the occupied and non-staying state, and the occupied and staying state. Alternatively, the electronic device 100 may set the three states for the user. This is not limited in embodiments of this application. The electronic device 100 may determine, based on an interface displayed by the electronic device 100 and a status of the specified region after switching, whether to display the mural interface. In some examples, the electronic device 100 may implement a status switching operation of the electronic device 100 on the specified region by setting a finite state machine.

In some examples, the electronic device 100 may switch between the three states through step 1 to step 4 shown in FIG. 2. A specific switching process is as follows:
1. If the electronic device 100 sets the specified region to be in the unoccupied state, after detecting that the user enters the specified region, the electronic device 100 switches the status of the specified region from the unoccupied state to the occupied and non-staying state.
2. If the electronic device 100 sets the specified region to be in the occupied and non-staying state, after detecting that the duration for which the user stays in the specified sub-region reaches preset duration 21 (for example, 5s), the electronic device 100 may set the specified region to be switched from the occupied and non-staying state to the occupied and staying state. The specified region includes the specified sub-region.
3. If the electronic device 100 sets the specified region to be in the occupied and non-staying state, after detecting that the duration for which the user leaves the specified region reaches preset duration 22, the electronic device 100 may set the specified region to switch from the occupied and non-staying state to the unoccupied state.
4. If the electronic device 100 sets the specified region to be in the occupied and staying state, when detecting that the user moves in the specified region, the electronic device 100 may set the specified region to switch from the occupied and staying state to the occupied and non-staying state.

That the user moves in the specified region may be understood as that the user leaves the specified sub-region in the specified region.

In some examples, the specified sub-region is the same as the specified region. That the electronic device 100 detects that the user stays in the specified sub-region may be that the electronic device 100 detects that the user is within a range of the specified region. In this way, when detecting that the user stays in the specified sub-region, the electronic device 100 may display the mural interface to the user, to improve spatial aesthetics.

In some other examples, the specified sub-region is smaller than the specified region, and all or a part of the specified sub-region belongs to the specified region. That the electronic device 100 detects that the user stays in the specified sub-region may be that the electronic device 100 detects that the user stays in the specified region and stays in the specified sub-region. For example, the specified sub-region may include a region whose center is a position of the user at a start time point of the preset stay duration and whose radius is a preset radius (for example, 0.3 meters or 0.5 meters). That the electronic device 100 detects that the user moves in the specified region may be understood as that the electronic device 100 detects that the user leaves the specified sub-region, and the electronic device 100 detects that the user does not leave the specified region. In this way, when the electronic device 100 detects that the user does not stay in the specified sub-region and moves in the specified region (for example, the user sweeps or mops the floor in the specified region), the electronic device 100 may remain in the screen-off state. When the electronic device 100 detects that the user stays in the specified sub-region (for example, the user sits still in the specified sub-region), the electronic device 100 may display the mural interface. This avoids a scenario in which the electronic device 100 displays the mural interface when the user does housework in the specified region and tends to keep the screen of the electronic device 100 off, to reduce power consumption of the electronic device 100.

When turning off the screen and setting the status of the specified region to the unoccupied state, the electronic device 100 may turn on the screen and display the mural interface after switching the status of the specified region from the unoccupied state to the occupied and staying state through step 1 and step 2. When displaying the mural interface and setting the status of the specified region to the occupied and staying state, the electronic device 100 may turn off the screen after switching the status of the specified region from the occupied and staying state to the unoccupied state through step 4 and step 3. In this way, the electronic device 100 sets the specified region to be in the occupied and non-staying state, so that the electronic device 100 switches to be in the occupied and staying state after determining that the user stays in front of the electronic device 100 for a period of time, and then turns on the screen and displays the mural interface. This can avoid frequent screen-on and screen-off.

In a possible implementation, after the status of the specified region of the electronic device 100 that displays the mural interface is switched to the unoccupied state, the electronic device 100 may turn off the screen after detecting that duration for which the status of the specified region is switched to the unoccupied state reaches preset switching duration. In this way, after switching to the unoccupied state, the electronic device 100 keeps displaying the mural interface, so that the user can continue to appreciate the mural interface after the user leaves the specified region for a short time and returns to the specified region.

In a possible implementation, the electronic device 100 displays the non-task interface. When the electronic device 100 detects that no user input is received within preset response duration, the electronic device 100 may display the mural interface and set the status of the specified region to the occupied and non-staying state.

In a possible implementation, the electronic device 100 displays the user interface. After receiving a screen-off input of the user, in response to the input, the electronic device 100 may turn off the screen and set the status of the specified region to the occupied and staying state. In this case, it may be considered that the user wants to turn off the screen, and unintentionally enables the electronic device to turn on the screen and display the mural interface. In other words, in this case, although the status of the specified region is the occupied and staying state, the electronic device 100 does not turn on the screen and display the mural interface. In this way, when the electronic device 100 receives the screen-off input, even if the user may still stay in the specified sub-region, the electronic device 100 does not turn on the screen and display the mural interface again.

In some other examples, the electronic device 100 may implement switching between the three states through step 1, step 2, step 3, and step 5 shown in FIG. 2. For descriptions of step 1 to step 3, refer to the foregoing embodiment. Details are not described herein again. Step 5 is as follows:

5. If the electronic device 100 sets the specified region to be in the occupied and staying state, after detecting that the duration for which the user leaves the specified region reaches preset duration 23, the electronic device 100 may set the specified region to switch from the occupied and staying state to the unoccupied state. The preset duration 23 and the preset duration 22 may be the same or different.

When turning off the screen and setting the status of the specified region to the unoccupied state, the electronic device 100 may turn on the screen and display the mural interface after switching the status of the specified region from the unoccupied state to the occupied and staying state through step 1 and step 2. When displaying the mural interface and setting the status of the specified region to the occupied and staying state, the electronic device 100 may turn off the screen after switching the status of the specified region from the occupied and staying state to the unoccupied state through step 5. For a description of detecting, by the electronic device 100, that the user stays in the specified sub-region, refer to the foregoing embodiment. Details are not described herein again. In this way, when the status of the specified region is the occupied and staying state, after the user leaves the specified region, the electronic device 100 does not need to first switch the status of the specified region to the occupied and non-staying state, and then switch to the unoccupied state, to reduce unnecessary status switching.

In a possible implementation, the electronic device 100 displays the user interface. After receiving a screen-off input of the user, in response to the input, the electronic device 100 may turn off the screen and set the status of the specified region to the occupied and staying state.

In this way, after turning off the screen, the electronic device 100 may further detect that the user is in the specified region of the electronic device 100. Therefore, after receiving the screen-off input, the electronic device 100 may set the status of the specified region to the occupied and staying state. Because the user controls the electronic device 100 to turn off the screen, it indicates that the user tends to control the electronic device 100 to turn off the screen, instead of turning on the screen and displaying the mural interface. Although the electronic device 100 sets the status of the specified region to the occupied and staying state, the electronic device 100 keeps the screen off, and the electronic device 100 can display the mural interface only after the electronic device 100 switches the status of the specified region to the unoccupied state when detecting that the duration for which the user leaves the specified region reaches the preset duration 23, and switches the status of the specified region from the unoccupied state to the occupied and staying state again. In addition, the status of the specified region of the electronic device 100 cannot be switched from the occupied and staying state to the occupied and non-staying state. This can further avoid a case that after the user moves in the specified region (for example, changes a position in the specified region, or temporarily leaves when going out of the specified region to fetch water and then returning to the specified region, or the like), the electronic device 100 switches the status of the specified region from the occupied and staying state to the occupied and non-staying state, then switches from the occupied and non-staying state to the occupied and staying state, and then turns on the screen again and displays the mural interface after switching the status of the specified region to the occupied and staying state. This conforms to an idea that the user wants the electronic device 100 to keep the screen off.

It should be noted that, in the following embodiments of this application, after the electronic device 100 sets the specified region to be in the occupied and staying state, the electronic device 100 switches the status of the specified region from the occupied and staying state to the unoccupied state after detecting that the duration for which the user leaves the specified region reaches the preset duration 23. In other words, the electronic device 100 does not perform step 4. In this way, a quantity of switching times of the electronic device 100 can be reduced. In addition, after the electronic device 100 receives the screen-off input, the user is still within a range of the specified region, and the electronic device 100 does not turn on the screen again.

In a possible implementation, the electronic device 100 displays the non-task interface. When the electronic device 100 does not receive a user input within preset response duration, the electronic device 100 may display the mural interface and set the status of the specified region to the occupied and non-staying state. In this way, when the electronic device 100 detects that the user does not operate the electronic device 100 within the preset response duration, the electronic device 100 may display the mural interface to display a painting or a photo, to improve an aesthetic degree of a space in which the electronic device 100 is located. The electronic device 100 sets the status of the specified region to the occupied and non-staying state. If the user stays in the specified sub-region of the electronic device 100 and the staying duration reaches the preset duration 21, the electronic device 100 sets the status of the specified region to the occupied and staying state. In this case, even if the user does not operate the electronic device 100, the electronic device 100 displays the mural interface. This can provide better viewing experience for the user. For example, when the user is in a call with a contact and it is inconvenient to operate the electronic device 100, the user may view the mural interface displayed by the electronic device 100, so that the user can appreciate the mural interface in the call. If the electronic device 100 detects that the duration for which the user leaves the specified region reaches the preset duration 22, the electronic device 100 may switch the status of the specified region to the unoccupied state, and then turn off the screen, to reduce power consumption of the electronic device 100.

The following describes the specified region in embodiments of this application by using examples. The specified region may be any region that can be detected by the electronic device 100. For example, the specified region may be located in front of the display of the electronic device 100. In this way, the user can view, standing in the specified region, content displayed on the display of the electronic device 100.

In some examples, the electronic device 100 may detect, through a camera, an infrared sensor, a Wi-Fi human body sensing technology, a Wi-Fi fingerprint positioning technology, or the like, whether the user is located in the specified region and whether the duration for which the user stays in the specified sub-region reaches the preset duration 21. This is not limited in embodiments of this application.

In embodiments of this application, an example in which the status of the specified region is detected by using an image captured by the camera is used for description. In the following embodiments, the camera of the electronic device 100 and the display of the electronic device 100 are in a same orientation. The specified region may be a field of view (field of view, FOV) region of the camera of the electronic device 100. The electronic device 100 may capture, through the camera at a preset interval (for example, 2s), an image in front of the screen of the electronic device 100, and determine the status of the specified region based on the image obtained by the camera. The image obtained by the camera may indicate whether the user is located in the specified region. The specified region is a location within a field of view range of the camera of the electronic device 100. The image obtained by the camera may further indicate whether the user remains stationary in the specified region.

For example, the electronic device 100 may recognize, by using an image recognition algorithm, whether the image obtained by the camera includes the user. When determining, based on the image obtained by the camera, that an image region corresponding to the specified region in the image obtained by the camera includes the user, the electronic device 100 determines that the user is located in the specified region. When determining, based on the image obtained by the camera, that the image region corresponding to the specified region in the image obtained by the camera does not include the user, the electronic device 100 determines that the user leaves the specified region. The image region corresponding to the specified region may be a region including all or a part of content of the image. In embodiments of this application, an example in which the image region corresponding to the specified region includes all the content of the image captured by the camera is used for description.

It may be understood that, that the electronic device 100 detects that the user stays in the specified region and the duration for which the user stays in the specified sub-region reaches the preset duration 21 includes: The electronic device 100 captures X frames of images through the camera within the preset duration 21, the electronic device 100 detects that the X frames of images include the user, and the user is located in the specified sub-region in the X frames of images, where the preset duration 21 is equal to a product of X and the preset interval, and X is a positive integer.

That the electronic device 100 detects that the duration for which the user leaves the specified region reaches the preset duration 22 includes: The electronic device 100 captures Y frames of images through the camera within the preset duration 22, and the electronic device 100 detects that none of the Y frames of images include the user, where the preset duration 22 is equal to a product ofY and the preset interval, and Y is a positive integer. Similarly, that the electronic device 100 detects that the duration for which the user leaves the specified region reaches the preset duration 23 includes: The electronic device 100 captures Z frames of images through the camera within the preset duration 23, and the electronic device 100 detects that none of the Z frames of images include the user, where the preset duration 23 is equal to a product of Z and the preset interval, and Z is a positive integer.

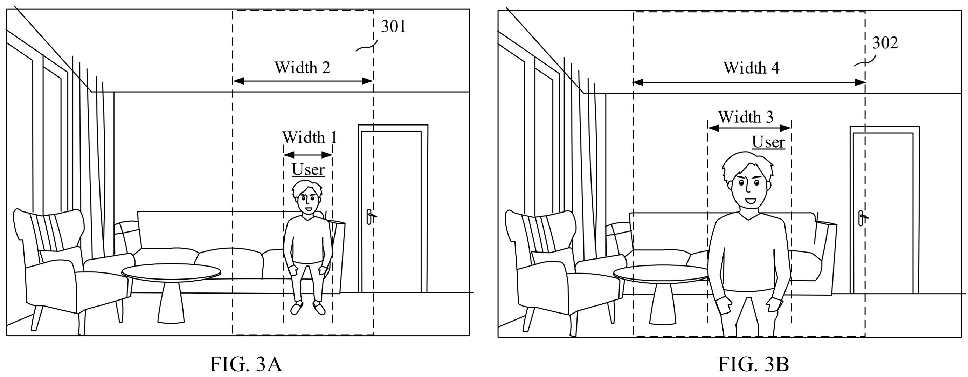

An image region corresponding to the specified sub-region may be a region that is in the field of view region of the camera and that is obtained by horizontally extending to the field of view region by a preset length by using a position of the user at a start time point of the preset duration 21 as a center axis. For example, the image obtained by the electronic device 100 through the camera is shown in FIG. 3A. The image region corresponding to the specified region may be a region shown in FIG. 3A, and the image region corresponding to the specified sub-region may be a region 301 obtained by horizontally extending by a preset length by using the user as a center in FIG. 3A. For another example, the image obtained by the electronic device 100 through the camera is shown in FIG. 3B. The image region corresponding to the specified region may be a region shown in FIG. 3B, and the image region corresponding to the specified sub-region may be a region 302 obtained by horizontally extending by a preset length by using the user as a center in FIG. 3B. It may be understood that a value of the preset length for horizontal extension may change with a position of the user in the image region corresponding to the specified region. For example, the electronic device 100 may determine the preset length for horizontal extension based on a width of the user in the captured image, to determine that when the user is closer to the electronic device 100, the width of the user in the image captured by the electronic device 100 is greater, a length of the image region corresponding to the specified sub-region increases accordingly, and an area of the image region corresponding to the specified sub-region in the image captured by the electronic device 100 also increases accordingly. As shown in FIG. 3A, the width of the user is a width 1, and a width of the image region corresponding to the specified sub-region is a width 2. As shown in FIG. 3B, the width of the user is a width 3, and the width of the image region corresponding to the specified sub-region is a width 4. A value of the width 3 is greater than a value of the width 1, and a value of the width 4 is greater than a value of the width 2. It should be noted that, determining the width of the image region corresponding to the specified sub-region based on the width of the user, and then determining the image region corresponding to the specified sub-region is merely an example herein, and the electronic device 100 may alternatively determine the image region corresponding to the specified sub-region in another manner. This is not limited in embodiments of this application.

It should be further noted that, the electronic device 100 may further determine, based on the image obtained by the camera and by using an image processing algorithm, the specified sub-region in which the user is located, and determine whether the user leaves the specified sub-region. This is not limited in embodiments of this application.

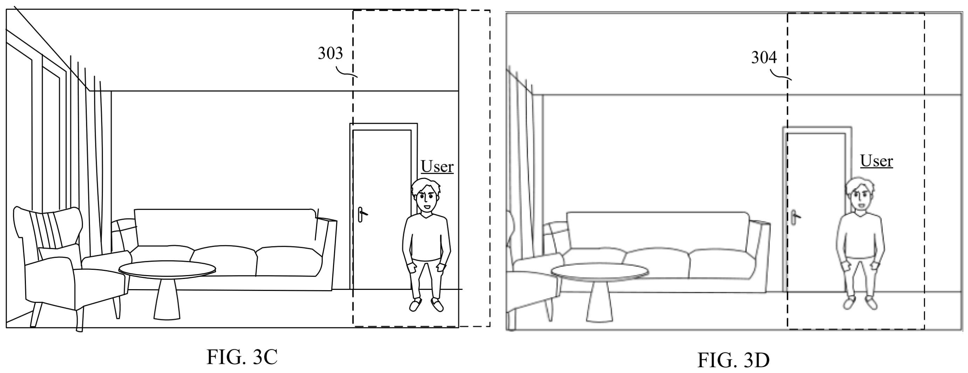

In some examples, when the orientation of the camera of the electronic device 100 does not change, if the electronic device 100 detects that the user is located at an edge of the specified region, as shown in FIG. 3C, the specified sub-region needs to be a region 303. However, because the camera of the electronic device 100 cannot obtain an image outside the specified region, the specified sub-region may be an intersection of the region 303 and the specified region.

Optionally, the electronic device 100 detects that the user is located at an edge of the specified region, as shown in FIG. 3C. The electronic device 100 may control the camera to rotate toward an azimuth of the user, to determine that the specified sub-region is a region 304 shown in FIG. 3D. After detecting that the user leaves the region 304, the electronic device 100 may reset the camera, and detect a position relationship between the user and the specified region again. When detecting that the user is located at the edge of the specified region, the electronic device 100 may rotate the camera again toward the azimuth of the user, to determine the specified sub-region. When detecting that the user is located in the middle of the specified region, the electronic device 100 may keep an angle of the camera, to determine the specified sub-region. When the electronic device 100 detects that the user leaves the specified region, the electronic device 100 may detect, at a preset interval, whether the user enters the specified region.

For example, after determining that the user is located in the specified region, the electronic device 100 may further determine, based on the image obtained by the camera, whether the duration for which the user stays in the specified sub-region reaches the preset duration 21. For example, after the electronic device 100 determines the specified sub-region at the start time point of the preset duration 21, if the user is located in the specified sub-region in all the images obtained within the preset duration 21, the electronic device 100 determines that the duration for which the user stays in the specified sub-region reaches the preset duration 21. When obtaining, within the preset duration 21 after the start time point, one frame of image in which the user is located outside the specified sub-region, the electronic device 100 may determine that the duration for which the user stays in the specified sub-region does not reach the preset duration 21. After determining that the duration for which the user stays in the specified sub-region does not reach the preset duration 21, the electronic device 100 may perform again an operation of detecting whether the duration for which the user stays in the specified sub-region reaches the preset duration 21.

In some examples, the electronic device 100 may determine, by using an indoor positioning technology, for example, a wireless fidelity (wireless fidelity, Wi-Fi) fingerprint positioning technology or a Wi-Fi human body sensing technology, whether a portable electronic device (for example, a mobile phone or a smartwatch) is located in a room in which the electronic device 100 is located, to determine whether a user carrying the portable electronic device is located in the room in which the electronic device 100 is located. The electronic device 100 performs, only when determining that the portable electronic device is located in the room in which the electronic device 100 is located, operations of determining, based on the image captured by the camera, whether the user is located in the specified region and detecting whether the duration for which the user stays in the specified sub-region reaches the preset duration 21. Optionally, when the electronic device 100 determines that the portable electronic device is located in the room in which the electronic device 100 is located, the electronic device 100 may further set the specified region to be in the occupied and non-staying state. In this way, the electronic device 100 captures, through the camera only when determining that the user is located in the same room as the electronic device 100, the image obtained by the camera, and determines the status of the specified region based on the image obtained by the camera, to reduce power consumption of the electronic device 100.

In some examples, the preset duration 21 of the electronic device 100 is less than the preset duration 22, and the preset duration 21 is less than the preset duration 23. In this way, the electronic device 100 can keep displaying the mural interface as long as possible after displaying the mural interface, and reduce a quantity of times of turning off the screen and a quantity of times of turning on the screen.

The following describes a flow block diagram of a display method according to an embodiment of this application.

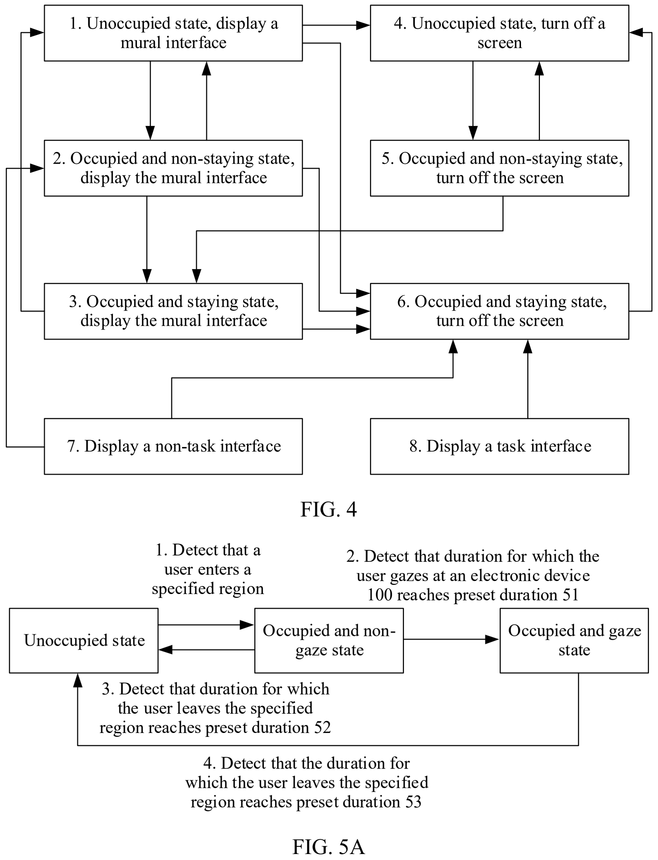

For example, as shown in FIG. 4, a procedure of switching a status and display content of a specified region by an electronic device 100 is as follows:
1. The electronic device 100 sets the specified region to be in an unoccupied state, and the electronic device 100 displays a mural interface.

The specified region set by the electronic device 100 is in the unoccupied state, and the electronic device 100 displays the mural interface. When detecting that a user enters the specified region, the electronic device 100 may perform step 2, that is, switch the status of the specified region from the unoccupied state to an occupied and non-staying state, and keep displaying the mural interface.

The specified region set by the electronic device 100 is in the unoccupied state, and the electronic device 100 displays the mural interface. After detecting that duration for which the specified region is in the unoccupied state reaches preset switching duration, the electronic device 100 may perform step 4, that is, keep the specified region in the unoccupied state and turn off a screen.

In some examples, after switching to the unoccupied state, the electronic device 100 may set a screen-off countdown. Total duration of the screen-off countdown is the preset switching duration. Before the countdown of the electronic device 100 ends, if the electronic device 100 detects that a person enters the specified region, the electronic device 100 switches the status of the specified region to the occupied and non-staying state, interrupts the screen-off countdown, and keeps displaying the mural interface. If the electronic device 100 does not detect that a person enters the specified region before the countdown ends, the electronic device 100 turns off the screen when the countdown ends. It may be understood that when a countdown value reaches zero, it may be considered that the countdown ends.

In some examples, the electronic device 100 may further display the screen-off countdown on the mural interface. Before the screen-off countdown ends, the electronic device 100 detects that the status of the specified region remains in the unoccupied state, and the electronic device 100 may turn off the screen when the screen-off countdown ends. Before the screen-off countdown ends, the electronic device 100 detects that the user enters the specified region, and the electronic device 100 cancels displaying the screen-off countdown. In some examples, the electronic device 100 may display, on the mural interface, a pop-up window including the screen-off countdown. In this way, the electronic device 100 may display the screen-off countdown, to indicate a screen-off time point of the electronic device 100.

In some examples, the electronic device 100 may set a screen-off countdown 1 when switching from the occupied and non-staying state to the unoccupied state, and set a screen-off countdown 2 when switching from an occupied and staying state to the unoccupied state. The screen-off countdown 1 and the screen-off countdown 2 may be the same or different.

The specified region set by the electronic device 100 is in the unoccupied state, and the electronic device 100 displays the mural interface. After receiving a screen-off input, the electronic device 100 may perform step 6, that is, switch the status of the specified region from the unoccupied state to the occupied and staying state, and turn off the screen.

2. The electronic device 100 sets the specified region to be in the occupied and non-staying state, and the electronic device 100 displays a mural interface.

The specified region set by the electronic device 100 is in the occupied and non-staying state, and the electronic device 100 displays the mural interface. When detecting that duration for which the user stays in a specified sub-region reaches preset duration 21, the electronic device 100 may perform step 3, that is, switch the status of the specified region from the occupied and non-staying state to the occupied and staying state, and keep displaying the mural interface.

The specified region set by the electronic device 100 is in the occupied and non-staying state, and the electronic device 100 displays the mural interface. When detecting that duration for which the user leaves the specified region reaches preset duration 22, the electronic device 100 may perform step 1, that is, switch the status of the specified region from the occupied and non-staying state to the unoccupied state, and keep displaying the mural interface.

The specified region set by the electronic device 100 is in the occupied and non-staying state, and the electronic device 100 displays the mural interface. After receiving the screen-off input, the electronic device 100 may perform step 6, that is, switch the status of the specified region from the occupied and non-staying state to the occupied and staying state, and turn off the screen.

3. The electronic device 100 sets the specified region to be in the occupied and staying state, and the electronic device 100 displays a mural interface.

The specified region set by the electronic device 100 is in the occupied and staying state, and the electronic device 100 displays the mural interface. When detecting that the duration for which the user leaves the specified region reaches preset duration 23, the electronic device 100 may perform step 1, that is, switch the status of the specified region from the occupied and staying state to the unoccupied state, and keep displaying the mural interface.

The specified region set by the electronic device 100 is in the occupied and staying state, and the electronic device 100 displays the mural interface. After receiving the screen-off input, the electronic device 100 may perform step 6, that is, keep the specified region in the occupied and staying state, and turn off the screen.

4. The electronic device 100 sets the specified region to be in the unoccupied state, and the electronic device 100 turns off the screen.

The specified region set by the electronic device 100 is in the unoccupied state, and the electronic device 100 turns off the screen. When detecting that the user enters the specified region, the electronic device 100 may perform step 5, that is, switch the status of the specified region from the unoccupied state to the occupied and non-staying state, and keep the screen off.

5. The electronic device 100 sets the specified region to be in the occupied and non-staying state, and the electronic device 100 turns off the screen.

The specified region set by the electronic device 100 is in the occupied and non-staying state, and the electronic device 100 turns off the screen. When detecting that the duration for which the user stays in the specified sub-region reaches the preset duration 21, the electronic device 100 may perform step 3, that is, switch the status of the specified region from the occupied and non-staying state to the occupied and staying state, and display the mural interface.

It should be noted that, when the electronic device 100 sets the specified region to be in the occupied and non-staying state, the electronic device 100 may detect that the user stays in the specified region for the preset duration 21 and stays in the specified sub-region for the preset duration 21. If the electronic device 100 detects that the user stays in the specified region for the preset duration 21 but does not stay in the specified sub-region for the preset duration 21, the electronic device 100 keeps the specified region in the occupied and non-staying state, and keeps the electronic device 100 in a screen-off state.

The specified region set by the electronic device 100 is in the occupied and non-staying state, and the electronic device 100 turns off the screen. When detecting that the duration for which the user leaves the specified region reaches the preset duration 22, the electronic device 100 may perform step 4, that is, switch the status of the specified region from the occupied and non-staying state to the unoccupied state, and keep the screen off.

6. The electronic device 100 sets the specified region to be in the occupied and staying state, and the electronic device 100 turns off the screen.

The specified region set by the electronic device 100 is in the occupied and staying state, and the electronic device 100 turns off the screen. When detecting that the duration for which the user leaves the specified region reaches the preset duration 23, the electronic device 100 may perform step 4, that is, switch the status of the specified region from the occupied and staying state to the unoccupied state, and keep the screen off.

7. The electronic device 100 displays a non-task interface.

The electronic device 100 displays the non-task interface. The electronic device 100 detects that no user input is received within preset response duration, sets the status of the specified region to the occupied and non-staying state, and switches to display the mural interface.

The electronic device 100 displays the non-task interface. After receiving the screen-off input, the electronic device 100 may perform step 6, that is, keep the specified region in the occupied and staying state, and turn off the screen.

8. The electronic device 100 displays a task interface.

The electronic device 100 displays the task interface. After receiving the screen-off input, the electronic device 100 may perform step 6, that is, keep the specified region in the occupied and staying state, and turn off the screen.

In conclusion, a status switching process and a display content switching process of the specified region of the electronic device 100 are shown in Table 1 below.

**Table 1: Table of a status change and a display status change of a specified region of an electronic device 100**

| Initial status of the specified region | Initial display status of the electronic device 100 | Switching condition | Status of the specified region after switching | Display status of the electronic device 100 after switching |
|---|---|---|---|---|
| Unoccupied state | Display a mural interface | Detect that a user enters the specified region | Occupied and non-staying state | Display the mural interface |
| Unoccupied state | Display the mural interface | Duration of switching to the unoccupied state reaches preset switching duration | Unoccupied state | Screen off |
| Unoccupied state | Display the mural interface | Receive a screen-off input | Occupied and staying state | Screen off |
| Occupied and non-staying state | Display the mural interface | Detect that duration for which the user stays in a specified sub-region reaches preset duration 21 | Occupied and staying state | Display the mural interface |
| Occupied and non-staying state | Display the mural interface | Detect that duration for which the user leaves the specified region reaches preset duration 22 | Unoccupied state | Display the mural interface |
| Occupied and non-staying state | Display the mural interface | Receive the screen-off input | Occupied and staying state | Screen off |
| Occupied and staying state | Display the mural interface | Detect that the duration for which the user leaves the specified region reaches the preset duration 22 | Unoccupied state | Display the mural interface |
| Occupied and staying state | Display the mural interface | Receive the screen-off input | Occupied and staying state | Screen off |
| Unoccupied state | Screen off | Detect that the user enters the specified region | Occupied and non-staying state | Screen off |
| Occupied and non-staying state | Screen off | Detect that the duration for which the user stays in the specified sub-region reaches the preset duration 21 | Occupied and staying state | Display the mural interface |
| Occupied and non-staying state | Screen off | Detect that the duration for which the user leaves the specified region reaches preset duration 23 | Unoccupied state | Screen off |
| Occupied and staying state | Screen off | Detect that the duration for which the user leaves the specified region reaches the preset duration 22 | Unoccupied state | Screen off |
| | Display a non-task interface | Detect that no user input is received within preset response duration | Occupied and non-staying state | Display the mural interface |
| | Display the non-task interface | Receive the screen-off input | Occupied and staying state | Screen off |
| | Display a task interface | Receive the screen-off input | Occupied and staying state | Screen off |

As shown in Table 1, when the electronic device 100 is in different initial display statuses and the initial status of the specified region, and determines that the switching condition shown in Table 1 is satisfied, the electronic device 100 may switch to the display status after switching and the status of the specified region after switching that are shown in Table 1.

In this way, the electronic device 100 can display the mural interface in a timely manner based on a displayed interface and the status of the specified region after switching. The mural interface displayed by the electronic device 100 may be used to decorate a room, so that an entire space is more beautiful and coordinated. The electronic device 100 may also turn off a screen in a timely manner based on the status change of the specified region, to reduce power consumption of the electronic device 100.

In a possible implementation, the electronic device 100 may switch the status of the specified region from the occupied and non-staying state or the occupied and staying state to the unoccupied state within a specified time period (for example, from 00:00 to 06:00). Then, the electronic device 100 no longer performs a related operation of switching the status of the specified region from the unoccupied state to the occupied and non-staying state. When the electronic device 100 displays the mural interface and the status of the specified region is switched to the unoccupied state, the electronic device 100 may further turn off the screen after duration for which the status of the specified region is switched to the unoccupied state reaches preset switching duration (for example, 10s). That the electronic device 100 no longer performs the related operation of switching the status of the specified region from the unoccupied state to the occupied and non-staying state may be that the electronic device 100 stops performing an operation of detecting whether a user exists in the specified region, or may be that the electronic device 100 stops performing an operation of displaying the mural interface in response to the status change of the specified region when the initial display status of the electronic device 100 is the screen-off state. In this way, after the electronic device 100 turns off the screen in the specified time period, the display remains in the screen-off state, and the mural interface is not displayed. Because the user tends to rest in the specified time period, the electronic device 100 stops, in the specified time period, switching the display status of the electronic device 100 from the screen-off state to displaying the mural interface, to avoid interfering with the user during nighttime rest. Optionally, the electronic device 100 may provide a function of setting the specified time period for the user. In this way, the user can set the specified time period. In this way, the electronic device 100 can display the mural interface only at appropriate time, and keep the screen off at other time. This can decorate the room in which the electronic device 100 is located, and can also reduce power consumption of the electronic device 100.

It should be noted that, the description of setting the status of the specified region in embodiments of this application is merely an example. The electronic device 100 may alternatively implement the operation of turning off the screen or displaying the mural interface shown in FIG. 4, without setting the status of the specified region. This is not limited in embodiments of this application.

In a possible implementation, when the screen of the electronic device 100 is in an off state, the electronic device 100 may turn on the screen and display the mural interface when detecting that the user gazes at the electronic device 100. When the screen of the electronic device 100 displays the mural interface, the electronic device 100 may turn off the screen when detecting that the user does not gaze at the electronic device 100. In this way, the electronic device 100 can display the mural interface only when detecting that the user gazes at the electronic device 100 (that is, a line of sight of the user falls on the display of the electronic device 100). The electronic device 100 may keep the screen in an off state when detecting that the user does not gaze at the electronic device 100 (that is, the line of sight of the user does not fall on the display of the electronic device 100), to reduce power consumption of the electronic device 100. In addition, the mural interface is displayed only when the user gazes at the electronic device 100. This can further avoid a case that the user is interfered with because the electronic device 100 displays the mural interface when the user lowers the head.

For example, the electronic device 100 may determine a line-of-sight range of the user (also referred to as a field-of-view range or a line-of-sight projection range of the user) based on an image obtained by a camera. The electronic device 100 may determine, when detecting that the line-of-sight range of the user includes the electronic device 100, that the user gazes at the electronic device 100. The electronic device 100 may determine, when detecting that the line-of-sight range of the user does not include the electronic device 100, that the user does not gaze at the electronic device 100.

In some examples, the electronic device 100 may set two states for the user. The two states include a gaze state and a non-gaze state. When the electronic device 100 sets the user to be in the non-gaze state and the electronic device 100 turns off the screen, the electronic device 100 may switch a status of the user from the non-gaze state to the gaze state when detecting that the user gazes at the electronic device 100, and turn on the screen of the electronic device 100 and display the mural interface. When the electronic device 100 sets the user to be in the gaze state and the electronic device 100 displays the mural interface, the electronic device 100 may switch the status of the user from the gaze state to the non-gaze state when detecting that the user does not gaze at the electronic device 100, and turn off the screen. In this way, the electronic device 100 can not only display the mural interface when detecting that the user gazes at the electronic device 100, to improve scenario aesthetics, but also turn off the screen after detecting that the user does not gaze at the electronic device 100, to reduce power consumption of the electronic device 100.

It should be noted that, the description of setting the status of the user in embodiments of this application is merely an example. The electronic device 100 may not need to set the status of the user, but only needs to detect whether the user gazes at the electronic device 100, to perform, based on a detection result, an operation of turning off the screen or displaying the mural interface. This is not limited in embodiments of this application.

In some other examples, when the electronic device 100 turns off the screen, the electronic device 100 may display the mural interface when detecting that duration for which the user gazes at the electronic device 100 reaches preset gaze duration. When the electronic device 100 displays the mural interface, the electronic device 100 may turn off the screen when detecting that the duration for which the user gazes at the electronic device 100 reaches preset non-gaze duration. In this way, the electronic device 100 does not frequently turn off and turn on the screen, to avoid increasing power consumption of the electronic device 100.

In a possible implementation, the electronic device 100 turns off the screen. After detecting that the user enters the specified region, the electronic device 100 detects that the duration for which the user gazes at the electronic device 100 reaches the preset gaze duration (for example, 5 seconds). In this case, the electronic device 100 turns on the screen and displays the mural interface. The electronic device 100 displays a wallpaper interface, and after the electronic device 100 detects that the user leaves the specified region and the duration for which the user leaves the specified region reaches the preset leave duration, the electronic device 100 turns off the screen. The specified region may be located in front of the display of the electronic device 100. In this way, after detecting that the user is located in the specified region, the electronic device 100 detects whether the user gazes at the electronic device 100. This can reduce power consumption of determining the line-of-sight range of the user by the electronic device 100. In addition, the electronic device 100 may determine, after detecting that duration for which the user gazes at the electronic device 100 reaches the preset gaze duration, that the user wants to view the mural interface, and provide the mural interface for the user. The electronic device 100 may not need to determine, when the user is located in the specified region, whether the user gazes at the electronic device 100, to reduce power consumption of the electronic device 100.

For example, the electronic device 100 may set three states for the specified region. The three states include the unoccupied state, an occupied and non-gaze state, and an occupied and gaze state. Alternatively, the electronic device 100 may set the three states for the user. This is not limited in embodiments of this application. The electronic device 100 may determine, based on an interface displayed by the electronic device 100 and a status of the specified region after switching, whether to display the mural interface. In some examples, the electronic device 100 may implement a status switching operation of the electronic device 100 on the specified region by setting a finite state machine.

Specifically, as shown in FIG. 5A, an unoccupied state shown in FIG. 5A corresponds to the unoccupied state shown in FIG. 2. An occupied and non-gaze state shown in FIG. 5A corresponds to the occupied and non-staying state shown in FIG. 2. An occupied and gaze state shown in FIG. 5A corresponds to the occupied and staying state shown in FIG. 2. This is not limited to the case in FIG. 2 that the electronic device 100 switches the status of the specified region from the occupied and non-staying state to the occupied and staying state when detecting that duration for which the user gazes at the specified region reaches preset duration 21. The electronic device 100 may switch the status of the specified region from the occupied and non-gaze state to the occupied and gaze state when detecting that duration for which the user gazes at the electronic device 100 reaches preset duration 51. When the status of the specified region is the occupied and non-gaze state and the electronic device 100 turns off a screen, the electronic device 100 may further turn on the screen and display a mural interface after switching the status of the specified region from the occupied and non-gaze state to the occupied and gaze state. For details about a display status switching procedure of the electronic device 100 and a status switching procedure of the specified region, refer to the embodiments shown in FIG. 2 and FIG. 4. Details are not described herein again. In this way, the electronic device 100 can display the mural interface only when detecting that the user gazes at the screen of the electronic device 100. When detecting that duration for which the user leaves the specified region reaches preset duration 23, the electronic device 100 turns off the screen. This causes no interference to the user, and can display the mural interface to the user at appropriate time.

For example, as shown in FIG. 5A, a specific process in which the electronic device 100 switches between the three states is as follows:
1. If the electronic device 100 sets the specified region to be in the unoccupied state, after detecting that the user enters the specified region, the electronic device 100 switches the status of the specified region from the unoccupied state to the occupied and non-gaze state.
2. If the electronic device 100 sets the specified region to be in the occupied and non-gaze state, the electronic device 100 may set the specified region to switch from the occupied and non-gaze state to the occupied and gaze state when detecting that the duration for which the user gazes at the electronic device 100 reaches the preset duration 51 (for example, 5s).
3. If the electronic device 100 sets the specified region to be in the occupied and non-gaze state, after detecting that the duration for which the user leaves the specified region reaches preset duration 52, the electronic device 100 may set the specified region to switch from the occupied and non-gaze state to the unoccupied state.
4. If the electronic device 100 sets the specified region to be in the occupied and gaze state, after detecting that the duration for which the user leaves the specified region reaches preset duration 53, the electronic device 100 may set the specified region to switch from the occupied and gaze state to the unoccupied state. For a description of each step in FIG. 5A, refer to the embodiments shown in FIG. 2 and FIG. 4. Details are not described herein again.

Optionally, this is not limited to step 4. The electronic device 100 may alternatively switch from the occupied and gaze state to the occupied and non-gaze state when detecting that duration for which the user does not gaze at the electronic device 100 reaches preset duration 54. This is not limited in embodiments of this application.

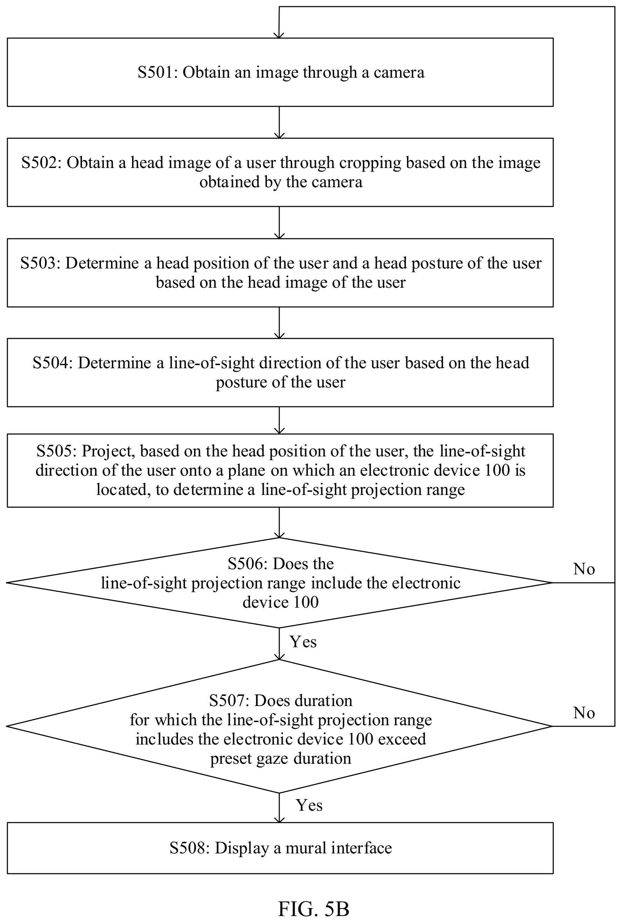

For example, as shown in FIG. 5B, that the electronic device 100 detects whether the duration for which the user gazes at the electronic device 100 exceeds preset gaze duration is as follows:
S501: The electronic device 100 obtains an image through a camera.

The screen of the electronic device 100 is in an off state. The electronic device 100 may obtain an image through the camera at a preset interval, and perform step S502 after obtaining the image obtained by the camera.

S502: The electronic device 100 obtains a head image of the user through cropping based on the image obtained by the camera.

After obtaining the image obtained by the camera, the electronic device 100 may recognize, by using an image recognition algorithm, the head image of the user in the image obtained by the camera, and crop the image obtained by the camera to obtain the head image of the user.

It should be noted that, when the electronic device 100 recognizes that the image obtained by the camera does not include the head image of the user, the electronic device 100 may perform step S501. In this way, after the electronic device 100 recognizes that the image obtained by the camera does not include the head image of the use, the electronic device 100 may re-obtain the image obtained by the camera.

S503: The electronic device 100 determines a head position of the user and a head posture of the user based on the head image of the user.

After obtaining the head image of the user, the electronic device 100 may recognize and determine the head position of the user and the head posture of the user.

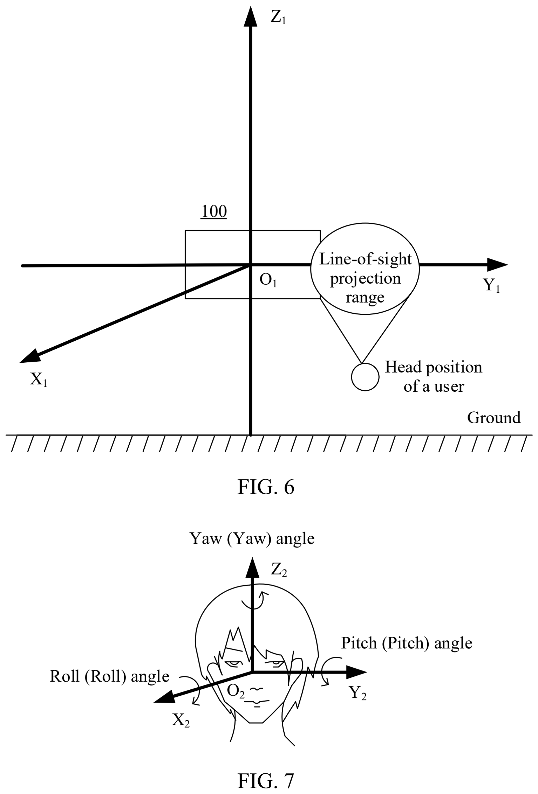

In some examples, the electronic device 100 may set a coordinate system O₁X₁Y₁Z₁ shown in FIG. 6. An origin O₁ is located at a center of the display of the electronic device 100, a plane Y₁O₁Z₁ is parallel to the display of the electronic device 100, and an axis X₁ is perpendicular to the display of the electronic device 100 and points from a rear cover of the electronic device 100 to the display of the electronic device 100. The electronic device 100 may determine a position (namely, the head position of the user) of the user's head in the coordinate system O₁X₁Y₁Z₁. The electronic device 100 may determine, based on the head position of the user, a position of a line-of-sight projection range of the user on the plane Y₁O₁Z₁ and the line-of-sight projection range. For example, the head position of the user may be represented as (x, y, z). A value of x may be used to determine a distance between the user's head and the electronic device 100 on the axis X₁. A smaller value of x indicates a shorter distance between the user and the screen of the electronic device 100, and a smaller line-of-sight projection range. A larger value of x indicates a longer distance between the user and the screen of the electronic device 100, and a larger line-of-sight projection range. A value of y may be used to determine a distance between the user's head and the electronic device 100 on an axis Y₁. A smaller absolute value of the value of y indicates a shorter distance between the user and the screen of the electronic device 100 on the axis Y₁, and a shorter distance between the line-of-sight projection range and the electronic device 100 on the axis Y₁. A larger absolute value of the value of y indicates a longer distance between the user and the screen of the electronic device 100 on the axis Y₁, and a longer distance between the line-of-sight projection range and the electronic device 100 on the axis Y₁. A value of z may be used to determine a distance between the user's head and the electronic device 100 on an axis Z₁, that is, the value of z may represent a height of the user's head. A smaller absolute value of the value of z indicates a shorter distance between the user and the screen of the electronic device 100 on the axis Z₁, and a shorter distance between the line-of-sight projection range and the electronic device 100 on the axis Z₁. A larger absolute value of the value of z indicates a longer distance between the user and the screen of the electronic device 100 on the axis Z₁, and a longer distance between the line-of-sight projection range and the electronic device 100 on the axis Z₁. It should be noted that, in some scenarios, the line-of-sight projection range may be blocked by another obstacle (for example, a floor). Therefore, when the user moves forward, a part of the line-of-sight projection range that is blocked by the obstacle decreases, and the line-of-sight projection range becomes larger; or when the user moves backward, a part of the line-of-sight projection range that is blocked by the obstacle increases, and the line-of-sight projection range becomes smaller.

It should be noted that the coordinate system O₁X₁Y₁Z₁ is merely an example. For example, the electronic device 100 may alternatively place the axis Y₁ at a position at which the ground intersects with a plane on which the electronic device 100 is located. A smaller difference between a height of the user's head and a height of the electronic device 100 indicates a shorter distance between the line-of-sight projection range and the electronic device 100 on the axis Y₁. This is not limited in embodiments of this application.

In some examples, the electronic device 100 may set a coordinate system O₂X₂Y₂Z₂ shown in FIG. 7. An origin O₂ is located on the user's head, a plane Y₂O₂Z₂ is parallel to the display of the electronic device 100, and an axis X₂ perpendicularly points to the display of the electronic device 100. The electronic device 100 may determine, by using a head posture estimation algorithm, a pitch (pitch) angle, a yaw (yaw) angle, and a roll (roll) angle of the user's head relative to the coordinate system O₂X₂Y₂Z₂. The pitch angle may indicate an angle at which the user's head rotates around an axis Y₂ (namely, an angle at which the user lowers or raises the head). The yaw angle may indicate an angle at which the user's head rotates around an axis Z₂ (namely, an angle at which the user turns the head to the left or right). The roll angle may indicate an angle at which the user's head rotates around an axis X₂ (namely, an angle at which the user tilts the head to the lower left or lower right).

In some examples, when the user's head rotates around the axis X₂, the line-of-sight projection range of the user moves only by a specified distance on the plane Y₂O₂Z₂, and the specified distance does not exceed 10 centimeters. Therefore, in the following embodiments of this application, impact of the roll angle on the line-of-sight projection range of the user may not be considered, and the line-of-sight projection range of the user is determined only based on the head position of the user, the pitch angle of the user's head, and the yaw angle of the user's head.

S504: The electronic device 100 determines a line-of-sight direction of the user based on the head posture of the user.

The electronic device 100 may determine the line-of-sight direction of the user based on a head-up direction of the user.

S505: The electronic device 100 projects, based on the head position of the user, the line-of-sight direction of the user onto the plane on which the electronic device 100 is located, to determine the line-of-sight projection range.

The line-of-sight projection range may indicate a field-of-view range in which the user can see the plane on which the electronic device 100 is located. The electronic device 100 may determine, based on the head position of the user and the head posture of the user, the line-of-sight projection range of the line-of-sight direction of the user on the plane on which the electronic device 100 is located.

S506: The electronic device 100 determines whether the line-of-sight projection range includes the electronic device 100.

In some examples, the line-of-sight direction of the user may include but is not limited to a left line-of-sight direction, a right line-of-sight direction, an upper line-of-sight direction, and a lower line-of-sight direction. The head-up direction may be a direction perpendicular to a direction in which the user's face faces outward. The electronic device 100 may rotate the head-up direction by an angle α (for example, 80 degrees) toward the left hand of the user, to obtain the left line-of-sight direction. The electronic device 100 may rotate the head-up direction by the angle α toward the right hand of the user, to obtain the right line-of-sight direction. The electronic device 100 may rotate the head-up direction by the preset angle α toward the top of the head of the user (that is, upward), to obtain the upper line-of-sight direction. The electronic device 100 may rotate the head-up direction by the preset angle α toward the foot of the user (that is, downward), to obtain the lower line-of-sight direction. The left line-of-sight direction may indicate a left field-of-view range of the user. The right line-of-sight direction may indicate a right field-of-view range of the user. The upper line-of-sight direction may indicate an upper field-of-view range of the user. The lower line-of-sight direction may indicate a lower field-of-view range of the user.

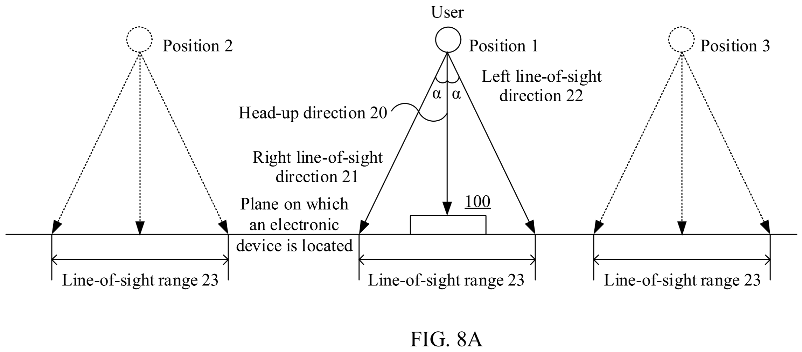

For example, the electronic device 100 may determine a left edge and a right edge of the line-of-sight projection range based on the yaw angle of the user's head. For example, in the top view shown in FIG. 8A, the head position of the user is a position 1 on a plane X₁O₁Y₁, an angle value of the yaw angle of the user's head is 0, a projection of a head-up direction 20 in the top view is perpendicular to the plane on which the electronic device 100 is located, and a right line-of-sight direction 21 and a left line-of-sight direction 22 show a field-of-view range of the user in the top view. The electronic device 100 may determine, based on the obtained image obtained by the camera, that the line-of-sight projection range is a line-of-sight range 23 shown in FIG. 8A. The line-of-sight range 23 includes the electronic device 100.

As shown in FIG. 8A, if the head position of the user is a position 2 on the right side of the position 1, the line-of-sight range 23 does not include the electronic device 100. If the head position of the user is a position 3 on the left side of the position 1, the line-of-sight range 23 does not include the electronic device 100. Therefore, when the head posture of the user remains unchanged and the head position of the user is different positions in a Y₁-axis direction, the line-of-sight projection range also changes with the head position of the user.

Similarly, if the head position of the user is a position that is closer to the electronic device 100 than the position 1 in an X₁-axis direction, the line-of-sight projection range of the user is less than the line-of-sight range 23. If the head position of the user is a position that is farther away from the electronic device 100 than the position 1 in the X₁-axis direction, the line-of-sight projection range of the user is greater than the line-of-sight range 23. However, because the head-up direction 20 perpendicularly points to the electronic device 100, the head position of the user moving forward or backward does not affect relative positions between the electronic device 100 and the head-up direction 20, and the center of the electronic device 100 is always located in the line-of-sight range 23. Therefore, when the head posture of the user remains unchanged and the head position of the user is different positions on the axis X₁, the line-of-sight projection range also changes with the head position of the user.

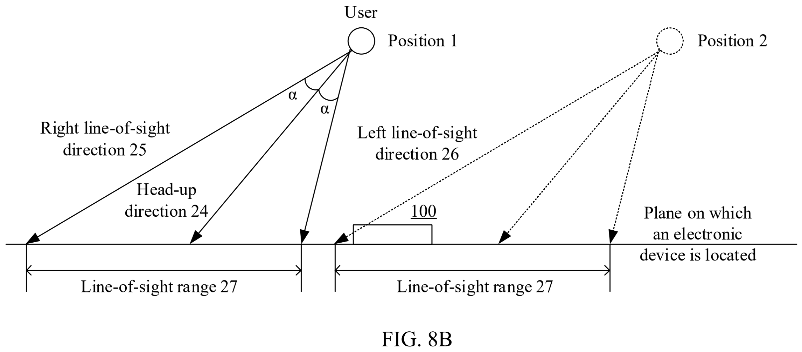

In the top view shown in FIG. 8B, the head position of the user is the position 1 on the plane X₁O₁Y₁, the angle value of the yaw angle of the user's head is a non-zero value, a projection of a head-up direction 24 in the top view is not perpendicular to the plane on which the electronic device 100 is located, and a right line-of-sight direction 25 and a left line-of-sight direction 26 show a field-of-view range of the user in the top view. The electronic device 100 may determine, based on the obtained image obtained by the camera, that the line-of-sight projection range is a line-of-sight range 27 shown in FIG. 8B. The line-of-sight range 27 does not include the electronic device 100.

As shown in FIG. 8B, if the head position of the user is a position 2 on the left side of the position 1, the line-of-sight range 27 includes the electronic device 100. If the head position of the user moves leftward from the position 2, the line-of-sight range 27 moves to the other side of the electronic device 100, and does not include the electronic device 100. If the head position of the user is a position on the right side of the position 1, the line-of-sight range 27 always does not include the electronic device 100. Therefore, when the head posture of the user remains unchanged and the head position of the user is different positions in the Y₁-axis direction, the line-of-sight projection range also changes with the head position of the user.

Similarly, if the head position of the user is a position that is closer to the electronic device 100 than the position 1 in the X₁-axis direction, the line-of-sight projection range of the user is less than the line-of-sight range 27. However, if an intersection point of the head-up direction 24 on the plane on which the electronic device 100 is located falls on the electronic device 100, the line-of-sight projection range of the user includes the electronic device 100. If the head position of the user is a position that is farther away from the electronic device 100 than the position 1 in the X₁-axis direction, the line-of-sight projection range of the user is greater than the line-of-sight range 27. However, if the intersection point of the head-up direction 24 on the plane on which the electronic device 100 is located is far away from the electronic device 100, the line-of-sight range 27 does not include the electronic device 100. Therefore, when the head posture of the user remains unchanged and the head position of the user is different positions in the X₁-axis direction, the line-of-sight projection range also changes with the head position of the user.

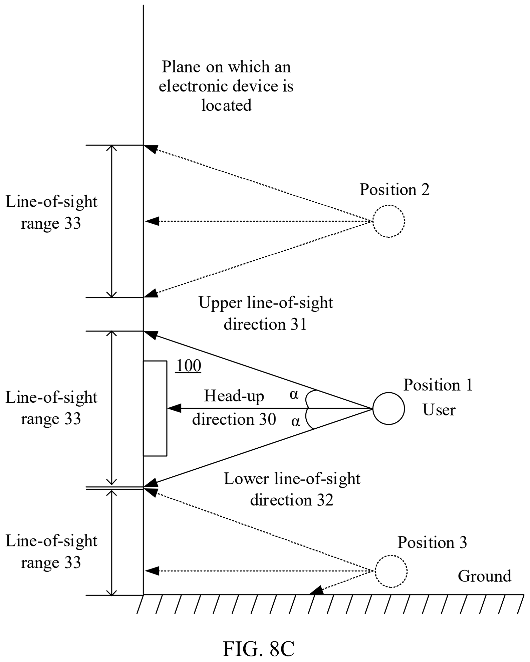

For example, the electronic device 100 may determine an upper edge and a lower edge of the line-of-sight projection range based on the pitch angle of the user's head. For example, in the side view shown in FIG. 8C, the head position of the user is the position 1 on the plane X₁O₁Z₁, an angle value of the pitch angle of the user's head is 0, a projection of a head-up direction 30 in the side view is perpendicular to the plane on which the electronic device 100 is located, and a lower line-of-sight direction 32 and an upper line-of-sight direction 31 show a field-of-view range of the user in the side view. The electronic device 100 may determine, based on the obtained image obtained by the camera, that the line-of-sight projection range is a line-of-sight range 33 shown in FIG. 8C. The line-of-sight range 33 includes the electronic device 100.

As shown in FIG. 8C, if the head position of the user is a position 2 above the position 1, the line-of-sight range 33 does not include the electronic device 100. Similarly, if the head position of the user is a position 3 below the position 1, the line-of-sight range 33 does not include the electronic device 100. Therefore, when the head posture of the user remains unchanged and the head position of the user is different positions in the Z₁-axis direction, the line-of-sight projection range also changes with the head position of the user.

If the head position of the user is a position that is closer to the electronic device 100 than the position 1 in the X₁-axis direction, the line-of-sight projection range of the user is less than the line-of-sight range 33. If the head position of the user is a position that is farther away from the electronic device 100 than the position 1 in the X₁-axis direction, the line-of-sight projection range of the user is greater than the line-of-sight range 33. Because the head-up direction 30 perpendicularly points to the electronic device 100, the head position of the user moving forward or backward does not affect relative positions between the electronic device 100 and the head-up direction 30, and the center of the electronic device 100 is always located in the line-of-sight range 33.

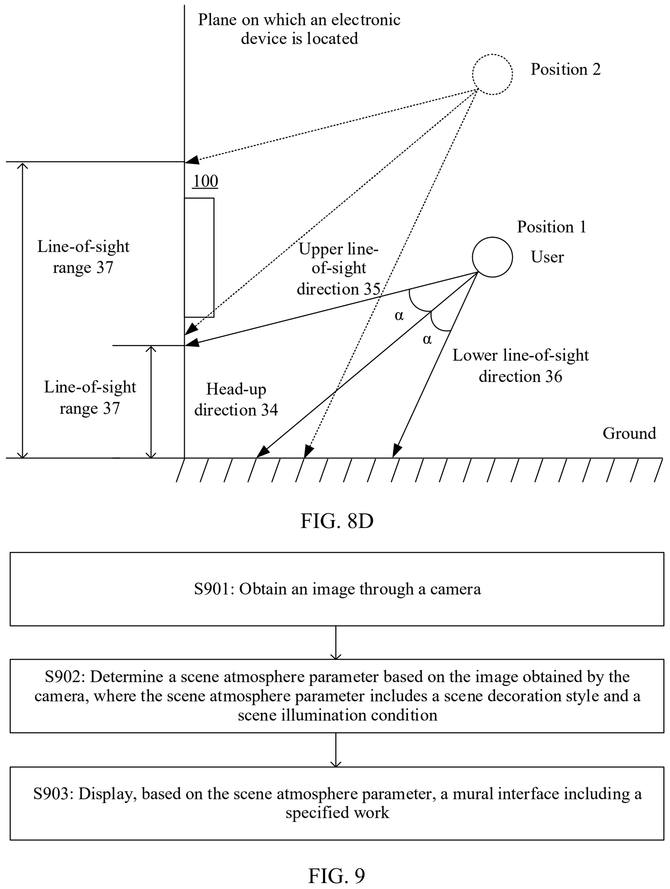

In the top view shown in FIG. 8D, the head position of the user is the position 1 on the plane X₁O₁Z₁, the angle value of the pitch angle of the user's head is a non-zero value, a projection of a head-up direction 34 in the side view is not perpendicular to the plane on which the electronic device 100 is located, and a lower line-of-sight direction 36 and an upper line-of-sight direction 35 show a field-of-view range of the user in the side view. The electronic device 100 may determine, based on the obtained image obtained by the camera, that the line-of-sight projection range is a line-of-sight range 37 shown in FIG. 8D. The line-of-sight range 37 does not include the electronic device 100.

As shown in FIG. 8D, if the head position of the user is a position 2 above the position 1, the line-of-sight range 37 includes the electronic device 100. It should be noted that, if the head position of the user continues to move upward from the position 2, the lower line-of-sight direction 36 in the line-of-sight range 37 moves to an upper side of the electronic device 100, and the line-of-sight range 37 does not include the electronic device 100. If the head position of the user is a position below the position 1, the line-of-sight range 37 always does not include the electronic device 100.

It should be noted that, because the line-of-sight range 37 is blocked by the ground, when the user moves forward, a part of the line-of-sight range 37 that is blocked by the ground decreases, and the line-of-sight range 37 becomes larger; or when the user moves backward, a part of the line-of-sight range 37 that is blocked by the ground increases, and the line-of-sight range 37 becomes smaller. If the head position of the user is a position that is closer to the electronic device 100 than the position 1 in the X₁-axis direction, and the upper line-of-sight direction 35 of the user falls on the electronic device 100, the line-of-sight projection range of the user includes the electronic device 100. If the head position of the user is a position that is farther away from the electronic device 100 than the position 1 in the X₁-axis direction, and the line-of-sight projection range of the user is blocked by the ground and is less than the line-of-sight range 33, the line-of-sight range 37 does not include the electronic device 100.

The electronic device 100 may determine the line-of-sight projection range based on the head position of the user, the line-of-sight range in the top view, and the line-of-sight range in the side view. When the line-of-sight range in the top view includes the electronic device 100 and the line-of-sight range in the side view includes the electronic device 100, the electronic device 100 may determine that the line-of-sight projection range includes the electronic device 100. When the line-of-sight range in the top view does not include the electronic device 100 or the line-of-sight range in the side view does not include the electronic device 100, the electronic device 100 may determine that the line-of-sight projection range does not include the electronic device 100.

It should be noted that, not limited to the foregoing line-of-sight projection range, the electronic device 100 may further use an intersection point between the head-up direction and the user's head as an intersection point between the line-of-sight direction of the user and the head-up direction, and use a direction whose included angle with the head-up direction is the preset angle α as the line-of-sight direction of the user. The line-of-sight direction of the user may be fitted into a cone with the head-up direction as a central axis. The electronic device 100 projects, based on the head position of the user, the line-of-sight direction of the user onto the plane on which the electronic device 100 is located. A shape of the line-of-sight projection range may be a circle or an ellipse. The electronic device 100 may determine, based on a position of the line-of-sight projection range on the plane on which the electronic device 100 is located and a position of the electronic device 100 on the plane, whether the line-of-sight projection range includes the electronic device 100.

When determining that the line-of-sight projection range includes the electronic device 100, the electronic device 100 may perform step S507. When determining that the line-of-sight projection range does not include the electronic device 100, the electronic device 100 may perform step S501.

S507: The electronic device 100 determines whether duration for which the line-of-sight projection range includes the electronic device 100 exceeds the preset gaze duration.

When performing step S505 to determine, for the first time, that the line-of-sight projection range includes the electronic device 100, the electronic device 100 may record the duration for which the line-of-sight projection range includes the electronic device 100. When the electronic device 100 determines that the duration does not exceed the preset gaze duration, the electronic device 100 may perform step S501. When the electronic device 100 determines that the duration exceeds the preset gaze duration, the electronic device 100 may perform step S508.

It should be noted that, in a process in which the electronic device 100 records the duration for which the line-of-sight projection range includes the electronic device 100, when performing step S506, the electronic device 100 determines that the line-of-sight projection range does not include the electronic device 100, and the electronic device 100 resets the recorded duration.

S508: The electronic device 100 displays the mural interface.

When the electronic device 100 determines that the duration for which the line-of-sight projection range includes the electronic device 100 exceeds the preset gaze duration, the electronic device 100 may display the mural interface.

It may be understood that, the electronic device 100 may obtain, at a preset interval when displaying the mural interface, the image obtained by the camera. The electronic device 100 may determine, based on the image obtained by the camera, whether the line-of-sight projection range includes the electronic device 100. For details, refer to the embodiment shown in FIG. 5B. When determining that the duration for which the line-of-sight projection range does not include the electronic device 100 exceeds the preset gaze duration, the electronic device 100 may turn off the screen.

In some examples, the electronic device 100 displays a user interface. After receiving a screen-off input of the user, the electronic device 100 may turn off the screen in response to the input. After the electronic device 100 turns off the screen, when detecting that the user re-enters the specified region after detecting that duration for which the user leaves the specified region reaches preset leave duration, the electronic device 100 may perform step S501 shown in FIG. 5B. In this way, the electronic device 100 remains in the screen-off state after the user actively turns off the screen. In this process, because the user actively turns off the screen, it indicates that the user tends to keep the screen of the electronic device 100 in the screen-off state, and the electronic device 100 does not perform the steps shown in FIG. 5B. The electronic device 100 may perform the steps shown in FIG. 5B after detecting that the user leaves.

In some examples, the electronic device 100 displays a non-task interface. When the electronic device 100 does not receive a user input within preset response duration, the electronic device 100 may display the mural interface. The electronic device 100 may further obtain the image obtained by the camera at a preset interval, and determine, based on the image obtained by the camera, whether the electronic device 100 turns off the screen. For details, refer to the foregoing embodiment. Details are not described herein again. In this way, when the electronic device 100 detects that the user does not operate the electronic device 100 within the preset response duration, the electronic device 100 may display the mural interface.

It should be noted that, not limited to detecting whether a line of sight of the user falls on the display of the electronic device 100 in the embodiment shown in FIG. 5B, the electronic device 100 may alternatively estimate an eyeball posture of the user based on the image obtained by the camera. The electronic device 100 may determine the line-of-sight range of the user based on the eyeball posture of the user, to determine whether the line of sight of the user falls on the display of the electronic device 100. This is not limited in embodiments of this application.

In a possible implementation, the electronic device 100 may determine a scenario atmosphere parameter based on the image obtained by the camera. The scenario atmosphere parameter may indicate a decoration style, an ambient light condition, and the like of a space in which the electronic device 100 is located. The electronic device 100 may determine a specified work based on the scenario atmosphere parameter, and display a mural interface including the specified work. In this way, the electronic device 100 displays, on the mural interface, a work having a consistent style with an environment in which the electronic device 100 is located, to enhance a sense of immersion and a sense of envelopment of the user, and improve user experience.

For example, as shown in FIG. 9, the electronic device 100 may obtain the specified work in the following steps.

S901: The electronic device 100 obtains an image through a camera.

The electronic device 100 may obtain an image through the camera at an interval of preset switching duration (for example, 30 seconds).

S902: The electronic device 100 determines a scenario atmosphere parameter based on the image obtained by the camera, where the scenario atmosphere parameter includes a scenario decoration style and a scenario illumination condition.

The electronic device 100 may determine, by using an image processing algorithm, the scenario atmosphere parameter of the image obtained by the camera. The scenario atmosphere parameter may indicate a room in which the electronic device 100 is located. The scenario atmosphere parameter may include but is not limited to the scenario decoration style, the scenario illumination condition, and the like. The scenario decoration style may indicate a decoration style of the room in which the electronic device 100 is located. For example, the scenario decoration style may include but is not limited to a Chinese decoration style, a western decoration style, and the like. The scenario illumination condition may indicate an illumination condition, for example, a color temperature, of the room in which the electronic device 100 is located. The color temperature may indicate that light in the current room is cold light or warm light. The cold light is light whose color temperature exceeds 5000 Kelvins, and the warm light may be light whose color temperature is 3000 Kelvins. The warm light has a red cast, and may provide a warm feeling for the user. The cold light has a blue cast, and may provide a cold feeling for the user.

S903: The electronic device 100 displays, based on the scenario atmosphere parameter, a mural interface including the specified work.

The electronic device 100 may obtain, based on the scenario atmosphere parameter, the specified work corresponding to the scenario atmosphere parameter. The electronic device 100 may determine the specified work from stored works based on the scenario atmosphere parameter. Alternatively, the electronic device 100 may obtain the specified work from a server based on the scenario atmosphere parameter.

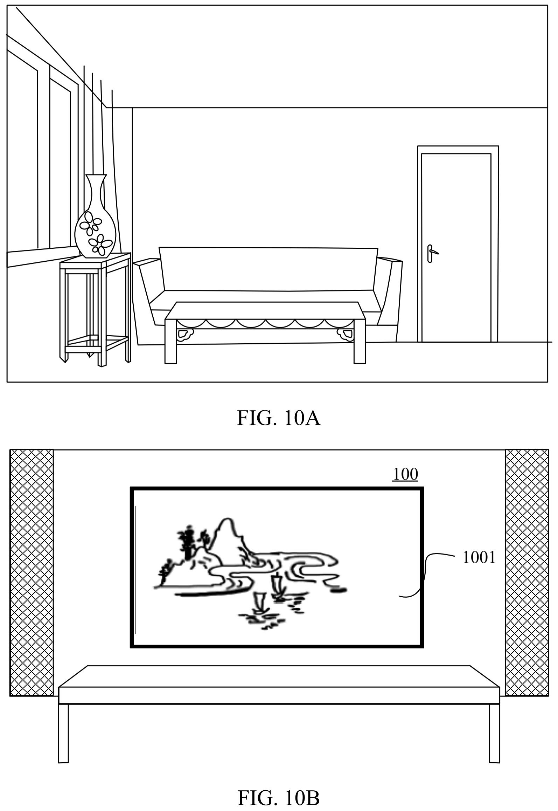

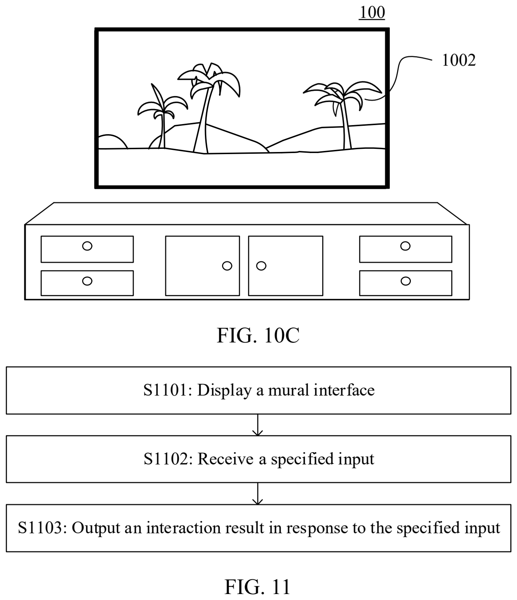

In some examples, the electronic device 100 may determine the specified work based on the scenario decoration style. If the scenario decoration style is the western decoration style, the electronic device 100 may obtain a western-style work (for example, an oil painting, a sketch, a photo including a person wearing western clothing, or a photo including a western architecture) as the specified work. If the scenario decoration style is the Chinese decoration style, the electronic device 100 may obtain a Chinese-style work (for example, an ink painting, a meticulous painting, a photo including a person wearing Chinese clothing, and a photo including a Chinese architecture) as the specified work. For example, if the electronic device 100 obtains an image obtained by the camera shown in FIG. 10A, the electronic device 100 may display a mural interface 1001 shown in FIG. 10B. For another example, if the electronic device 100 obtains, through the camera, an image shown in any frame in FIG. 3A to FIG. 3D, the electronic device 100 may display a mural interface 1002 shown in FIG. 10C.

In some examples, the electronic device 100 may determine the specified work based on the color temperature. For example, when determining that ambient light is warm light, the electronic device 100 may display a warm-tone painting. When determining that the ambient light is cold light, the electronic device 100 may display a cool-tone painting.

In some examples, the electronic device 100 may determine the specified work based on the scenario decoration style and the color temperature. For example, when the electronic device 100 determines that the scenario decoration style is the western decoration style and the ambient light is the cold light, the electronic device 100 displays an oil painting work including the sea or the starry sky. It may be understood that, the specified work provided in embodiments of this application is merely an example, and should not constitute a specific limitation on the mural interface displayed by the electronic device 100.

In some examples, when a quantity of specified works obtained by the electronic device 100 is greater than 1, the electronic device 100 may switch the work displayed on the mural interface at an interval of preset carousel duration (for example, one minute). In this way, the electronic device 100 may display a plurality of works in carousel mode, to provide more diversified visual experience for the user.

In a possible implementation, the electronic device 100 may further capture a nearby sound, and determine a specified work based on the image obtained by the camera and the nearby sound. In this way, the electronic device 100 may determine, based on a decoration style, an ambient light condition, and an ambient sound of an environment in which the electronic device 100 is located, a specified work that fits a current scenario, and display the specified work. The mural interface displayed by the electronic device 100 is consistent with a current environment style, and is more suitable for the current environment. In this way, the mural interface and the environment are integrated into an entirety, to provide more immersive experience for the user.

The ambient sound captured by the electronic device 100 may include but is not limited to a wind sound, an insect sound, a bird sound, a rain sound, and the like. For example, if the electronic device 100 determines that the scenario decoration style is the Chinese decoration style, the ambient light is the warm light, and the captured ambient sound includes the bird sound, the electronic device 100 may display, on the mural interface, a meticulous painting including a bird. In this way, the electronic device 100 can display a corresponding mural interface based on the environment and the sound, to provide better audio-visual experience for the user.

In some examples, when a sound intensity of the ambient sound captured by the electronic device 100 is less than a preset sound intensity threshold (for example, 30 decibels), the electronic device 100 may display a work that fits a quiet environment, for example, a landscape photo or a landscape painting. When the sound intensity of the ambient sound captured by the electronic device 100 is greater than the preset sound intensity threshold (for example, 40 decibels), the electronic device 100 may display a work that fits a lively environment, for example, a warm-tone painting or photo.

In some examples, the electronic device 100 may display the mural interface based on the ambient light condition by using a specified display effect. For example, the electronic device 100 may determine the specified display effect based on a light intensity. For example, when determining that the light intensity is greater than a preset light intensity threshold, the electronic device 100 may increase brightness of the display of the electronic device 100. When determining that the light intensity is less than the preset light intensity threshold, the electronic device 100 may reduce the brightness of the display of the electronic device 100.

For another example, the electronic device 100 includes an ambient light. When determining that the light intensity is less than the preset light intensity threshold, the electronic device 100 may adjust an irradiation direction and irradiation brightness of the ambient light of the electronic device 100, to implement a spotlight effect. In this way, a middle region of the mural interface displayed by the electronic device 100 is illuminated by the ambient light, and an edge region of the mural interface is dark, to highlight the mural interface. This provides an atmosphere of appreciating a painting in an art gallery for the user. Optionally, the electronic device 100 may obtain the light intensity through an ambient light sensor.

In some examples, the electronic device 100 may adjust display brightness of each region of the display, to highlight details of the work on the mural interface. For example, when detecting that the light intensity is less than the preset light intensity threshold, the electronic device 100 may increase brightness of a middle region of the display, and decrease brightness of an edge region of the display. In this way, the electronic device 100 can highlight display content in the middle of the wallpaper interface.

In a possible implementation, the electronic device 100 may receive an input of the user, and set a specified work range. The electronic device 100 may display works within the specified work range on the mural interface. For example, the specified work range may indicate an author of a work, completion time of the work, a type of the work (for example, an ink painting, a gouache painting, an oil painting, a sketch, or a photo), a subject of the work (for example, an architecture, a person, a landscape, or an article), and the like. In some examples, the electronic device 100 may receive a voice input of the user, and set a specified work range. For example, after capturing a voice input "Hey Celia, display a person sketch" of the user through a microphone, the electronic device 100 may display, on the mural interface, a sketch whose subject is a person.

In some examples, the electronic device 100 may determine, within the specified work range, the specified work based on the image and/or the ambient sound obtained by the camera. For example, the specified work range set by the electronic device 100 is works of a specified painter. When determining, based on the image obtained by the camera, that the ambient light is warm light, the electronic device 100 may display a warm-tone work in the works of the specified painter.

In some examples, the electronic device 100 may display the mural interface with another electronic device in the room in which the electronic device 100 is located. For example, the another electronic device may include but is not limited to an electric curtain, a smart light source, and the like. For example, when the electronic device 100 displays a cool-tone work, the electronic device 100 may indicate the smart light source to adjust to cold light. For another example, when the electronic device 100 displays the mural interface in the spotlight effect, the electronic device 100 may indicate the electric curtain to be set to a closed state, and indicate the smart light source to be turned off. In this way, the electronic device 100 can cooperate with the another electronic device in the current room to achieve a better display effect.

In some examples, when displaying the mural interface, the electronic device 100 may play, based on content of the mural interface, an audio related to the content of the mural interface. For example, when the electronic device 100 displays a photo including the sea, the electronic device 100 may play a sound of waves. For another example, when the electronic device 100 displays a photo including a ballet dancer, the electronic device 100 may play ballet music. In this way, when displaying the mural interface, the electronic device 100 may play, through a speaker, the audio related to the content of the mural interface, to provide a unified and integrated display effect for the user in terms of vision and hearing of the user.

In a possible implementation, the electronic device 100 displays the mural interface. After receiving a user input, the electronic device 100 may output an interaction result in response to the user input. The interaction result may include but is not limited to displaying a dynamic interaction image, displaying related information of the mural interface, playing an audio, and the like. In this way, the mural interface of the electronic device 100 can provide an interaction function for the user, and the electronic device 100 can sense an interaction behavior of the user and output a corresponding interaction result based on the interaction behavior of the user. This increases fun and interaction of the mural interface.

In some examples, the electronic device 100 displays the mural interface, and a status of the specified region set by the electronic device 100 may be an unoccupied state, an occupied and non-staying state, or an occupied and staying state. After receiving the user input, the electronic device 100 may set the status of the specified region to the occupied and staying state. In this way, the user interacts with the mural interface, indicating that the user tends to keep the electronic device 100 displaying the mural interface. After receiving the user input, the electronic device 100 may directly set the status of the specified region to the occupied and staying state, so that time for displaying the mural interface by the electronic device 100 is prolonged.

In some other examples, the electronic device 100 displays the mural interface. After receiving the user input, the electronic device 100 may re-detect whether the duration for which the user leaves the specified region reaches the preset leave duration. Optionally, the electronic device 100 may further increase a value of the preset leave duration. In this way, the electronic device 100 can prolong the time for displaying the mural interface, to satisfy a requirement of the user for watching the mural interface.

For example, as shown in FIG. 11, a procedure in which the electronic device 100 implements user interaction includes the following steps.

S1101: The electronic device 100 displays a mural interface.

The electronic device 100 may provide an interactive mural interface for a user. The electronic device 100 sets a correspondence between a specified input and an interaction result on the interactive mural interface. After receiving a specified input, the electronic device 100 may determine an interaction result corresponding to the specified input, and output the interaction result on the interactive mural interface through a display and/or a speaker.

S1102: The electronic device 100 receives the specified input.

The specified input may include but is not limited to a touch input, a voice input, an action input, an input of a remote control device 200, and the like. The electronic device 100 may receive the touch input through a touchscreen. The electronic device 100 may receive the voice input through a microphone. The electronic device 100 may receive the action input through the camera. The electronic device 100 may receive the input of the remote control device 200 through a wireless communication module. The remote control device 200 may send the specified input to the electronic device 100 after receiving an input of the user for a button or a touchpad.

S1103: The electronic device 100 outputs the interaction result in response to the specified input.

The electronic device 100 may output the interaction result of the mural interface through the display and the speaker in response to the specified input. For example, the interaction result may be playing an audio related to picture content, displaying information related to the picture content, displaying an animation of the picture content, or the like.

In some examples, the electronic device 100 may set the specified input to the touch input for the mural interface, and the interaction result is displaying detailed information (for example, an author name, a work introduction, and an author introduction) of a work on the mural interface. After receiving the specified input (for example, the touch input) for the mural interface, the electronic device 100 may display, in response to the specified input, the author of the work, the introduction of the work, and the like on the mural interface. In this way, when viewing a work of interest, the user may obtain detailed information of the work from the interaction result of the electronic device 100. This helps the user search for the work of interest.

In a possible implementation, the electronic device 100 may recognize a subject of display content on the mural interface by using an image recognition algorithm. After recognizing the subject of the display content, the electronic device 100 may set the correspondence between the specified input and the interaction result for the subject. For example, the subject of the display content on the mural interface may include but is not limited to a person, an animal, an architecture, a plant, an article, a landscape, and the like. In this way, when displaying the mural interface, the electronic device 100 may set the correspondence between the specified input and the interaction result for the mural interface, so that the user can interact with the electronic device 100, to increase fun.

For example, when recognizing that the subject is a person, the electronic device 100 may set a specified input of the subject to a greeting action input (for example, waving) of the user or a greeting voice input (for example, "hello") of the user, and set a corresponding interaction result of the specified input to playing a greeting audio. In this way, the user can greet the person on the mural interface, to implement a voice interaction effect.

For another example, when recognizing that the subject is a plant or an animal, the electronic device 100 may set a specified input of the subject to a touch input (for example, a single tap, a double tap, or a touch and hold), and set a corresponding interaction result of the specified input to displaying detailed information (for example, a name, a classification, or a growth environment) of the subject. In this way, the user can learn of, through the electronic device 100, information about the animal or plant displayed on the mural interface.

For another example, when recognizing that the subject is a landscape, the electronic device 100 may set a specified input of the subject to a touch input (for example, a single tap, a double tap, or a touch and hold), and set a corresponding interaction result of the specified input to displaying detailed information of the landscape (for example, an address of the landscape or a travel plan). The travel plan may include but is not limited to recommended travel time, a transportation travel solution for traveling from a current position of the user to a landscape address, a local food recommendation, and the like. In this way, when viewing a beautiful landscape, the user can determine an address of the landscape, so that the user can go to the landscape.

In some examples, the electronic device 100 may further set an interaction animation for the subject on the mural interface by using an image processing algorithm. For example, the electronic device 100 may perform operations such as translation, scaling, and rotation on the subject, to implement a dynamic movement effect of the subject. For example, the electronic device 100 may zoom in the subject, to implement an effect that the subject approaches the user.

In some examples, the electronic device 100 may collect an action input of the user through the camera, and output an interaction result on the mural interface in response to the action input of the user. In this way, the electronic device 100 can collect the action input of the user, and implement an action interaction effect on the mural interface based on an action of the user.

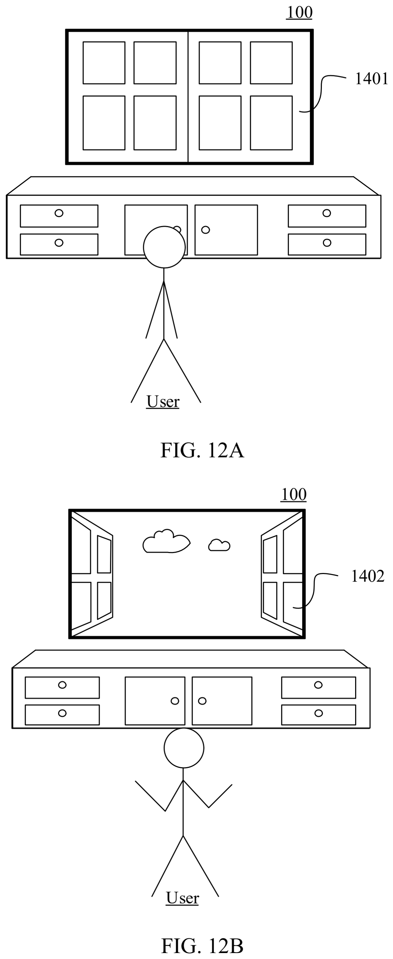

For example, the electronic device 100 may display a mural interface 1401 shown in FIG. 12A. The mural interface 1401 includes a closed window. When receiving an action input of opening the window by the user, the electronic device 100 may display, in response to the input, a mural interface 1402 shown in FIG. 12B.

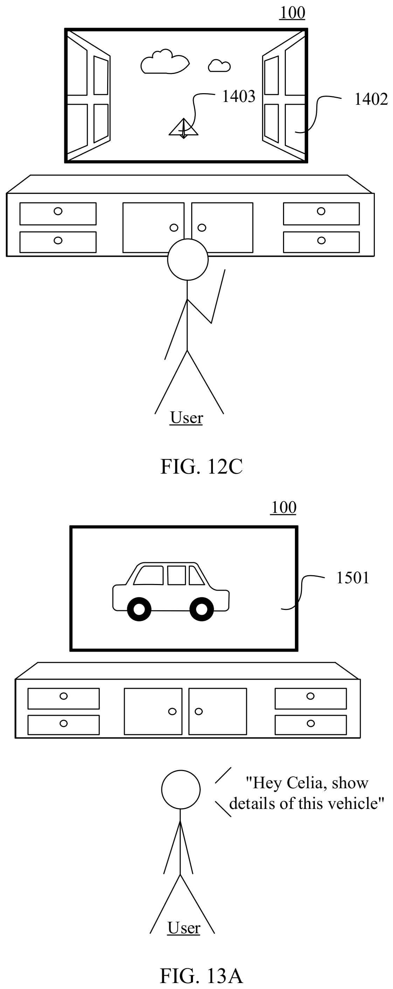

As shown in FIG. 12B, the window on the mural interface 1402 is in an open state, and a landscape may be further displayed in the open window on the mural interface 1402. Herein, the electronic device 100 displays a scene of the sky. When receiving an action input of throwing forward by the user, the electronic device 100 may further display, in response to the input, an airplane icon 1403 shown in FIG. 12C. The electronic device 100 may gradually scale down the airplane icon 1403. The electronic device 100 may cancel displaying the airplane icon 1403 after scaling down the airplane icon 1403 to a preset size (for example, 10 pixels). In this way, the electronic device 100 can implement an effect that the airplane flies away.

For another example, the electronic device 100 displays the airplane icon 1403 shown in FIG. 12C. When receiving an action input of blowing by the user, the electronic device 100 may further change a movement direction of the airplane icon 1403 in response to the input. Optionally, the electronic device 100 may further play a wind sound through the speaker. In this way, the electronic device 100 can implement an effect that the airplane is blown away by the wind.

In some examples, the electronic device 100 may collect a voice input of the user through the microphone, and output an interaction result on the mural interface in response to the voice input of the user. In this way, the electronic device 100 can collect the voice input of the user, and implement a voice interaction effect on the mural interface based on voice content of the user.

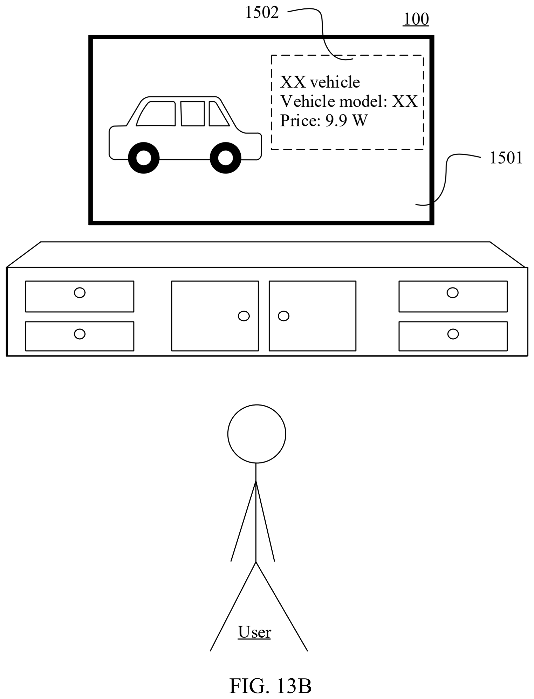

For example, the electronic device 100 displays a mural interface 1501 shown in FIG. 13A. The mural interface 1501 includes a vehicle. When receiving a voice input for querying detailed information of a subject on the mural interface 1501, the electronic device 100 may display, in response to the input, text information 1502 shown in FIG. 13B. For example, the voice input may be "Hey Celia, show details of this vehicle".

As shown in FIG. 13B, the electronic device 100 displays the text information 1502 on the mural interface 1501. The text information 1502 includes detailed information of the vehicle (for example, a vehicle brand, a vehicle model, and a vehicle price). In this case, the text information 1502 may include "XX vehicle", "vehicle model: XX", and "price: 9.9 w". In this way, the electronic device 100 can implement an effect of displaying detailed information of the mural interface in response to the voice input of the user.

For another example, when displaying the mural interface 1501 shown in FIG. 13A, the electronic device 100 may receive a voice input "hello" of the user, and play a horn sound through the speaker in response to the input. Optionally, the electronic device 100 may further zoom in and then zoom out the vehicle on the mural interface 1501. In this way, the electronic device 100 can provide an effect of greeting the vehicle on the mural interface 1501 for the user.

In some examples, the electronic device 100 may receive a touch input of the user for the touchscreen, and output an interaction result on the mural interface in response to the touch input of the user. In this way, the electronic device 100 can collect the touch input of the user, and implement a touch interaction effect on the mural interface based on a touch point of the user on the display.

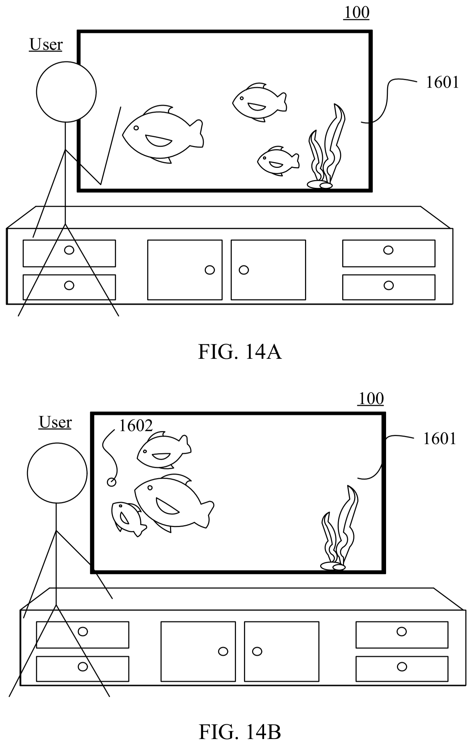

For example, the electronic device 100 displays a mural interface 1601 shown in FIG. 14A. The mural interface 1601 includes a fish pond, and the fish pond includes one or more fishes. When receiving a touch input (for example, a single tap) for the mural interface 1601, the electronic device 100 may display, in response to the input, the mural interface 1601 shown in FIG. 14B. After receiving the touch input of the user, the electronic device 100 may display a fish food icon 1602 at a position at which the touch input of the user is received on the display. The electronic device 100 may further control the one or more fishes to move to the position of the fish food icon 1602. Optionally, the electronic device 100 may further play, through the speaker, an audio of fish food falling into water and/or an audio of fish swimming. In this way, the electronic device 100 can implement a display effect of feeding the fish by the user.

When receiving a touch input of dragging any fish by the user shown in FIG. 14A, the electronic device 100 may further display, in response to the input, a display effect that the selected fish moves as a finger of the user moves on the touchscreen. In this way, the electronic device 100 can provide a function of moving an object on the mural interface for the user, so that the user can adjust a relative position of each object on the mural interface.

In some examples, the electronic device 100 may receive a control signal sent by the remote control device 200 through a wireless communication module, and output an interaction result on the mural interface in response to the control signal. The remote control device 200 may receive an input of the user for a button or a touchpad of the remote control device 200, and send the control signal to the electronic device 100. In this way, the electronic device 100 can receive the input of the remote control device 200, and implement a remote control interaction effect on the mural interface based on the input of the remote control device 200.

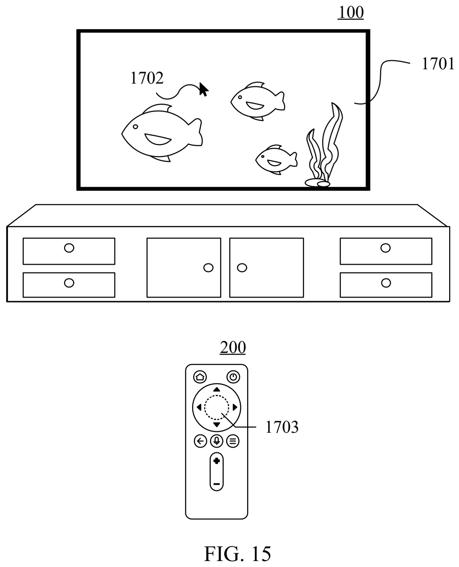

For example, the electronic device 100 may display a mural interface 1701 shown in FIG. 15. The mural interface 1701 includes a cursor 1702. The electronic device 100 may receive an input of the remote control device 200, and move the cursor 1702. The remote control device 200 may receive an input of moving the remote control device 200 by the user, and send an input of moving the cursor 1702 to the electronic device 100. The remote control device 200 may determine a movement direction of the cursor 1702 based on a direction in which the user moves the remote control device 200, and determine a movement distance of the cursor 1702 based on a distance by which the user moves the remote control device 200. Alternatively, the remote control device 200 may receive an input of the user for the touchpad of the remote control device 200, and send an input of moving the cursor 1702 to the electronic device 100. The remote control device 200 may determine a movement direction of the cursor 1702 based on a movement direction of the finger of the user on the touchpad of the remote control device 200, and determine the movement distance of the cursor 1702 based on a movement distance of the finger of the user on the touchpad of the remote control device 200.

The mural interface 1701 further includes a fish pond, and the fish pond includes one or more fishes. The electronic device 100 may receive a remote control input of the remote control device 200. For example, after receiving an input of the user for an OK button 1703, the remote control device 200 may send the remote control input to the electronic device 100. The electronic device 100 may display the fish food icon at a position of the cursor 1702 in response to the remote control input. The electronic device 100 may further control the one or more fishes to move to the position of the fish food icon. For details, refer to the embodiment shown in FIG. 14B. Details are not described herein again. In this way, the electronic device 100 can provide a function of remotely interacting with the mural interface for the user. The user may remotely interact with the mural interface through the remote control device 200. The interaction manner is more flexible.

It should be noted that, the display content of the interactive mural interface and the interaction result output by the electronic device 100 are merely examples. The electronic device 100 may further provide another interactive mural interface, to implement more diversified interaction effects.

It should be understood that the steps in the foregoing method embodiments may be completed by using a hardware integrated logic circuit in the processor or instructions in a form of software. The steps of the method disclosed with reference to embodiments of this application may be directly performed by a hardware processor, or may be performed by a combination of hardware in the processor and a software module.

This application further provides an electronic device. The electronic device may include a memory and a processor. The memory may be configured to store a program. The processor may be configured to invoke the program in the memory, so that the electronic device performs the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory. The memory is configured to store program instructions and data. The memory is located inside the processor or outside the processor.

The chip system may include a chip, or may include a chip and another discrete component.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

This application further provides a program product. The program product includes a program (which may also be referred to as code or instructions). When the program is run, an electronic device is enabled to perform the method performed by the electronic device 100 in any one of the foregoing embodiments.

This application further provides a readable storage medium. The readable storage medium stores a program (which may also be referred to as code or instructions). When the program is run, an electronic device is enabled to perform the method performed by the electronic device 100 in any one of the foregoing embodiments.

It should be understood that the processor in embodiments of this application may be an integrated circuit chip, and has a signal processing capability. During implementation, steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a program. When the program is executed by the one or more processors, the apparatus is enabled to perform the method in the foregoing method embodiments.

The apparatus, the readable storage medium, the program product, or the chip provided in embodiments of this application is configured to perform the corresponding method provided above. Therefore, for beneficial effects that can be achieved, refer to beneficial effects in the corresponding method provided above. Details are not described herein again.

Implementations of this application may be randomly combined to achieve different technical effects.

All or a part of the foregoing embodiments may be implemented by using software, hardware, firmware, or any combination thereof. When software is used to implement embodiments, embodiments may be implemented completely or partially in a form of a program product. The program product includes one or more instructions. When the program instructions are loaded and executed on an electronic device, the procedure or functions according to this application are all or partially generated. The electronic device may be a general-purpose computer, a dedicated computer, a computer network, or another programmable apparatus. The instructions may be stored in a readable storage medium or may be transmitted from a readable storage medium to another readable storage medium. For example, the instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The readable storage medium may be any usable medium accessible by the electronic device, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or a part of the procedures of the methods in embodiments may be implemented by a program instructing related hardware. The program may be stored in a readable storage medium. When the program is executed, the procedures of the methods in embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, and improvement made according to the disclosure of the present invention shall fall within the protection scope of the present invention.

## Claims

1. A display method, applied to an electronic device, wherein the electronic device comprises a display, and the method comprises:
turning off the display;
when the display remains off, detecting that a user enters a first region;
if it is detected that the user stays in the first region for first duration and stays in the second region for the first duration, switching the display from being off to being on, and displaying a first interface on the display, wherein the first region comprises the second region;
after displaying the first interface on the display, if it is detected that duration for which the user leaves the first region reaches second duration, switching the display from displaying the first interface to being off; and
if it is detected that the user stays in the first region for the first duration but does not stay in the second region for the first duration, keeping the display off.

2. The method according to claim 1, wherein the method further comprises:
in response to a received first input, switching the display from being on to being off;
when the display is off, detecting whether the user leaves the first region; and
if it is detected that the duration for which the user leaves the first region reaches third duration, detecting whether the user enters the first region, wherein the third duration is less than the second duration.

3. The method according to claim 1, wherein the method further comprises:
displaying a second interface on the display, wherein the second interface is different from the first interface;
detecting a user input when displaying the second interface on the display, and displaying the first interface on the display if it is detected that duration for which no user input is received reaches fourth duration; and
when displaying the first interface on the display, detecting whether the user leaves the first region, and turning off the display if it is detected that the duration for which the user leaves the first region reaches fifth duration.

4. The method according to any one of claims 1 to 3, wherein after displaying the first interface on the display and before switching the display from displaying the first interface to being off, the method further comprises:
displaying a first countdown on the first interface when it is detected that the duration for which the user leaves the first region reaches the third duration, wherein duration of the first countdown is equal to sixth duration, and the sixth duration is a difference between the second duration and the third duration; or
displaying a second countdown on the first interface when it is detected that the duration for which the user leaves the first region reaches seventh duration, wherein duration of the second countdown is equal to sixth duration, and the sixth duration is a difference between the fifth duration and the seventh duration.

5. The method according to claim 4, wherein after displaying the first countdown on the first interface, the method further comprises:
before it is detected that the duration for which the user leaves the first region reaches the second duration, if it is detected that the user enters the first region, canceling displaying the first countdown.

6. The method according to any one of claims 1 to 5, wherein the electronic device further comprises a camera, and the first region is within a field of view FOV range of the camera.

7. The method according to any one of claims 1 to 6, wherein the first interface is a wallpaper interface.

8. The method according to any one of claims 1 to 7, wherein the method further comprises one or more of the following:
switching an unoccupied state to an occupied and non-staying state in response to detecting that the user enters the first region;
switching the occupied and non-staying state to an occupied and staying state in response to detecting that the user stays in the second region for the first duration; and
switching the occupied and staying state to the unoccupied state in response to detecting that the duration for which the user leaves the first region reaches the third duration.

9. The method according to claim 8, wherein after displaying the first interface on the display, if it is detected that the duration for which the user leaves the first region reaches the second duration, switching the display from displaying the first interface to being off specifically comprises:
turning off the display when it is detected that duration for which the occupied and staying state is switched to the unoccupied state reaches the sixth duration, wherein the sixth duration is the difference between the second duration and the third duration.

10. The method according to claim 2, wherein the method further comprises one or more of the following:
setting to an occupied and staying state in response to the first input; and
switching the occupied and staying state to an unoccupied state in response to detecting that the duration for which the user leaves the first region reaches the third duration.

11. The method according to claim 3, wherein the method further comprises one or more of the following:
setting to an occupied and non-staying state in response to detecting that the duration for which no input is received reaches the fourth duration; and
switching the occupied and non-staying state to the unoccupied state in response to detecting that the duration for which the user leaves the first region reaches seventh duration, wherein the seventh duration is less than the fifth duration.

12. The method according to claim 11, wherein turning off the display if it is detected that the duration for which the user leaves the first region reaches the fifth duration specifically comprises:
turning off the display when it is detected that duration for which the occupied and non-staying state is switched to the unoccupied state reaches sixth duration, wherein the sixth duration is a difference between the fifth duration and the seventh duration.

13. A display method, applied to an electronic device, wherein the electronic device comprises a display, and the method comprises:
turning off the display;
when the display remains off, detecting that a user enters a first region;
after detecting that the user enters the first region, if it is detected that duration for which the user gazes at the display reaches first duration, switching the display from being off to being on, and displaying a first interface on the display;
after displaying the first interface on the display, if it is detected that duration for which the user leaves the first region reaches second duration, switching the display from displaying the first interface to being off; and
after detecting that the user enters the first region, if it is detected that the duration for which the user gazes at the display does not reach the first duration, keeping the display off.

14. The method according to claim 13, wherein the method further comprises:
turning off the display in response to a received first input;
when the display is off, detecting whether the user leaves the first region; and
if it is detected that the duration for which the user leaves the first region reaches third duration, detecting whether the user enters the first region, wherein the third duration is less than the second duration.

15. The method according to claim 13, wherein the method further comprises:
displaying a second interface on the display, wherein the second interface is different from the first interface;
detecting a user input when displaying the second interface on the display, and displaying the first interface on the display if it is detected that duration for which no user input is received reaches fourth duration; and
when displaying the first interface on the display, detecting whether the user leaves the first region, and turning off the display if it is detected that the duration for which the user leaves the first region reaches fifth duration.

16. The method according to any one of claims 13 to 15, wherein after displaying the first interface on the display and before switching the display from displaying the first interface to being off, the method further comprises:
displaying a first countdown on the first interface when it is detected that the duration for which the user leaves the first region reaches the third duration, wherein duration of the first countdown is equal to sixth duration, and the sixth duration is a difference between the second duration and the third duration.

17. The method according to claim 16, wherein after displaying the first countdown on the first interface, the method further comprises:
before it is detected that the duration for which the user leaves the first region reaches the second duration, if it is detected that the user enters the first region, canceling displaying the first countdown.

18. The method according to any one of claims 13 to 17, wherein the electronic device further comprises a camera, and the first region is within a field of view FOV range of the camera.

19. The method according to any one of claims 13 to 18, wherein the first interface is a wallpaper interface.

20. An electronic device, comprising a display, one or more processors, and one or more memories, wherein the display and the one or more memories are coupled to the one or more processors, the one or more memories are configured to store an executable program, and when the one or more processors execute the executable program, the electronic device is enabled to perform the method according to any one of claims 1 to 12 or claims 13 to 19.

21. Areadable storage medium, storing a program, wherein when the program is run on an electronic device, the electronic device is enabled to perform the method according to any one of claims 1 to 12 or claims 13 to 19.
